# EUROPEAN PATENT APPLICATION

(11) **EP 4 811 315 A1**
(43) Date of publication of application: **23.09.2026**
(21) Application number: 25219491.5
(22) Date of filing: 28.11.2025
(51) Int. Cl.: G06V 30/422, G06V 30/414, G06V 10/764, G06V 10/82, G06F 30/18, G06V 30/148

(54) **METHOD AND SYSTEM FOR DETERMINING PIPELINE FLOW IN NON-EDITABLE SCHEMATIC ILLUSTRATION**

(30) Priority: 20.03.2025 IN 202541025242
(71) Applicant: L & T Technology Services Limited, Chennai 600089 (IN)
(72) Inventor: MURTHY, Pavan Narasimha, 570019 Mysuru (IN); KUMAR, Pragyesh, 282010 Agra (IN)
(74) Representative: Studio Torta S.p.A.

(57) **Abstract**

A method (800) and a system (100) for determining pipeline flow in a non-editable schematic illustration is disclosed. A processor detects a set of object-ROls corresponding to a plurality of object-entities. Entity metadata is determined from the set of object-ROls. Entity classification information is determined. A set of lines are determined. Position information of each of the set of lines is determined. One or more horizontal line clusters are determined. One or more vertical line clusters are determined. One or more pipeline nodes are determined. One or more intersection nodes are determined for each of the set of lines. Each of the one or more intersection nodes for each of the set of lines are classified as one of a source node or a sink node. A directed graph is created. The pipeline flow in the non-editable schematic illustration by determining a set of flow-paths based on the directed graph.

## Description

The following specification particularly describes the invention and the manner in which it is to be performed

### Technical field

This disclosure relates generally to the field of processing and analysing non-editable schematic illustrations, and more specifically to a method and system for determining pipeline flow in non-editable schematic illustration.

### BACKGROUND

Schematic illustrations such as Piping and Instrumentation Diagrams (P&IDs) are widely used in industries such as oil and gas, chemical processing, power plants, and manufacturing to represent process flows, equipment, and instrumentation. These diagrams play an important role in engineering design, system operation, and maintenance planning by providing a visual representation of pipelines, valves, pumps, and other process components. However, P&IDs are often complex, containing multiple interconnected elements, and require precise interpretation to ensure the proper functioning of industrial systems. Conventionally, these schematic illustrations have been kept in non-editable formats like scanned images or PDFs, which renders them not usable for modern digital workflow. Converting those illustrations into editable formats greatly enhances their access, interoperability, and usability for automation and further analysis in engineering workflows. To address these challenges, automated P&ID processing methods have been developed to extract, process, and analyse P&IDs.

Despite advancements in digital tools, existing P&ID processing methods still face significant challenges in automatically recognizing pipelines, identifying pipeline flow, and determining the process direction accurately. Conventional approaches often rely on basic image processing or text recognition, which may not be sufficient to handle variations in diagram formats, line overlaps, or the presence of noise in scanned schematic illustrations.

Therefore, there is a need for a methodology of determining pipeline flow in non-editable schematic illustration.

### SUMMARY OF THE INVENTION

In an embodiment, a method for determining pipeline flow in a non-editable schematic illustration is disclosed. The method may include detecting, by a processor, a set of object-region of interests (object-ROls) corresponding to a plurality of object-entities in the non-editable schematic illustration and associated entity metadata from the set of object-ROIs using an object detection technique. In an embodiment, the entity metadata may include object orientation information, class label information, and object location information associated to each of the set of object-ROls. The method may further include determining, by the processor, entity classification information by classifying one or more of the set of object-ROls as one of a plurality of predefined child-classes based on the class label information of a corresponding object-ROI using a Deep Learning (DL) model. The method may further include determining, by the processor, a set of lines based on determination of a skeletonized image of the non-editable schematic illustration, using an image processing technique. In an embodiment the set of lines may be determined based on a determination of a set of vertical lines and a set of horizontal lines. The method may further include determining, by the processor, position information of each of the set of lines. The method may further include determining, by the processor, one or more horizontal line clusters by clustering each of the set of horizontal lines based on the corresponding position information of each of the set of horizontal lines. The method may further include determining, by the processor, one or more vertical line clusters by clustering each of the set of vertical lines based on the corresponding position information of each of the set of vertical lines. The method may further include determining, by the processor, one or more pipeline nodes based on a determination of a line intersection between at least one of the set of vertical lines with at least one of the set of horizontal lines. The method may further include determining, by the processor and for each of the set of lines, one or more pipeline nodes based on a determination of a line intersection between at least one of the set of vertical lines with at least one of the set of horizontal lines. The method may further include classifying, by the processor and for each of the set of lines, each of the one or more intersection nodes as one of: a source node or a sink node based on determination of a flow direction of the corresponding line, and the entity classification information of the at least one of the set of object-ROls. The method may further include creating, by the processor, a directed graph based on the one or more horizontal line clusters, the one or more vertical line clusters, the one or more pipeline nodes and the classification of each of the one or more intersection nodes of each of the set of lines. The method may further include determining, by the processor, the pipeline flow in the non-editable schematic illustration by determining a set of flow-paths based on the directed graph.

In another embodiment, a system for determining pipeline flow in a non-editable schematic illustration is disclosed. The system may include a processor, and a memory communicatively coupled to the processor, wherein the memory stores processor-executable instructions, which, on execution, cause the processor to detect a set of object-region of interests (object-ROls) corresponding to a plurality of object-entities in the non-editable schematic illustration and associated entity metadata from the set of object-ROIs using an object detection technique. In an embodiment, the entity metadata may include object orientation information, class label information, and object location information associated to each of the set of object-ROIs. The processor may further determine entity classification information by classifying one or more of the set of object-ROIs as one of a plurality of predefined child-classes based on the class label information of a corresponding object-ROI using a Deep Learning (DL) model. The processor may further determine a set of lines based on determination of a skeletonized image of the non-editable schematic illustration, using an image processing technique. In an embodiment, the set of lines may be determined based on a determination of a set of vertical lines and a set of horizontal lines. The processor may further determine position information of each of the set of lines. The processor may further determine one or more horizontal line clusters by clustering each of the set of horizontal lines based on the corresponding position information of each of the set of horizontal lines. The processor may further determine one or more vertical line clusters by clustering each of the set of vertical lines based on the corresponding position information of each of the set of vertical lines. The processor may further determine one or more pipelines nodes based on a determination of a line intersection between at least one of the set of vertical lines with at least one of the set of horizontal lines. The processor may further, for each of the set of lines, determine one or more intersection nodes based on intersection of a corresponding line and at least one of the set of object-ROls. The processor may further, for each of the set of lines, classify each of the one or more intersection nodes as one of a source node or a sink node based on determination of a flow direction of the corresponding line, and the entity classification information of the at least one of the set of object-ROIs. The processor may further create a directed graph based on the one or more horizontal line clusters, the one or more vertical line clusters, the one or more pipeline nodes and the classification of each of the one or more intersection nodes of each of the set of lines. The processor may further determine the pipeline flow in the non-editable schematic illustration by determining a set of flow-paths based on the directed graph.

It is to be understood that both the foregoing general description and the following detailed description are exemplary and explanatory only and are not restrictive of the invention, as claimed.

### BRIEF DESCRIPTION OF THE DRAWING

The accompanying drawings, which are incorporated in and constitute a part of this disclosure, illustrate exemplary embodiments and, together with the description, serve to explain the disclosed principles.
**FIG. 1** is a block diagram of an exemplary system for determining pipeline flow in non-editable schematic illustration, in accordance with an embodiment of the present disclosure.
**FIG. 2** is a functional block diagram of the computing device of the system of **FIG.** 1, in accordance with an embodiment of the present disclosure.
**FIG. 3** illustrates a non-editable schematic illustration depicting clustering of a set of lines, in accordance with an embodiment of the present disclosure.
**FIG. 4A** depicts a schematic representation illustrating determination of continuity information of two lines based on detection of an object-ROI from the set of object ROIs, in accordance with an embodiment of the present disclosure.
**FIG. 4B** depicts a schematic representation illustrating determination of continuity information of two lines based on detection of an object-ROI from the set of object ROIs, in accordance with another embodiment of the present disclosure.
**FIG. 4C** depicts a schematic representation illustrating determination of continuity information of two lines based on detection of one line between the two lines, in accordance with an embodiment of the present disclosure.
**FIG. 5** depicts a schematic representation illustrating determination of pipeline nodes in the non-editable schematic illustration, in accordance with an embodiment of the present disclosure.
**FIG. 6** illustrates a directed graph, in accordance with an embodiment of the present disclosure.
**FIG. 7** depicts a schematic representation illustrating determination of a set of flow-paths based on the directed graph of **FIG. 6****,** in accordance with an embodiment of the present disclosure.
**FIG. 8A** **and** **FIG. 8B** is a flow diagram of a methodology of determining pipeline flow in a non-editable schematic illustration, in accordance with an embodiment of the present disclosure.
**FIG. 9** is a flow diagram of a methodology of determining one or more pipeline nodes, in accordance with an embodiment of the present disclosure.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered exemplary only, with the true scope being indicated by the following claims. Additional illustrative embodiments are listed.

Further, the phrases "in some embodiments", "in accordance with some embodiments", "in the embodiments shown", "in other embodiments", and the like mean a particular feature, structure, or characteristic following the phrase is included in at least one embodiment of the present disclosure and may be included in more than one embodiment. In addition, such phrases do not necessarily refer to the same embodiments or different embodiments. It is intended that the following detailed description be considered exemplary only, with the true scope being indicated by the following claims.

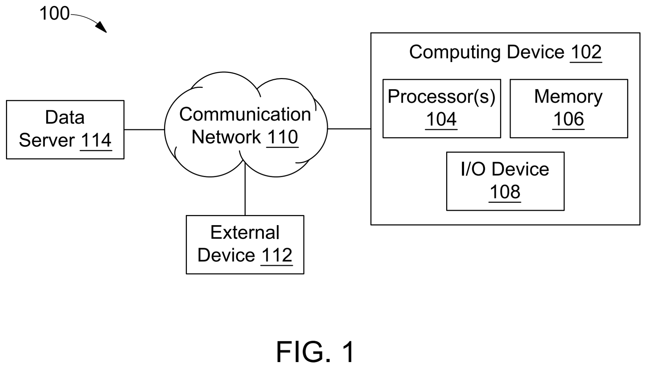

Referring now to **FIG.** 1, a block diagram of an exemplary system 100 for determining pipeline flow in a non-editable schematic illustration, is illustrated, in accordance with an embodiment of the present disclosure. The system 100 may include a computing device 102, an external device 112, and a data server 114 communicably coupled to each other through a wired or wireless communication network 110. The computing device 102 may include a processor 104, a memory 106 and an input/output (I/O) device 108.

In an embodiment, examples of processor(s) 104 may include, but are not limited to, an Intel^{®} Itanium^{®} or Itanium 2 processor(s), or AMD^{®} Opteron^{®} or Athlon MP^{®} processor(s), Motorola^{®} lines of processors, Nvidia^{®}, FortiSOC^{™}, system on a chip processors or other future processors.

In an embodiment, the memory 106 may store instructions that, when executed by the processor 104, and cause the processor 104 to determine pipeline flow in a non-editable schematic illustration, as will be discussed in greater detail herein below. In an embodiment, the memory 106 may be a non-volatile memory or a volatile memory. In an embodiment, the memory 106 may also store a single module or a combination of different modules to determine pipeline flow in non-editable schematic illustration. Examples of non-volatile memory may include but are not limited to, a flash memory, a Read Only Memory (ROM), a Programmable ROM (PROM), Erasable PROM (EPROM), and Electrically EPROM (EEPROM) memory. Further, examples of volatile memory may include but are not limited to, Dynamic Random Access Memory (DRAM), and Static Random-Access memory (SRAM).

In an embodiment, the I/O device 108 may comprise of variety of interface(s), for example, interfaces for data input and output devices, and the like. The I/O device 108 may facilitate inputting of instructions by a user communicating with the computing device 102. In an embodiment, the I/O device 108 may be wirelessly connected to the computing device 102 through wireless network interfaces such as Bluetooth^{®}, infrared, or any other wireless radio communication known in the art. In an embodiment, the I/O device 108 may be connected to a communication pathway for one or more components of the computing device 102 to facilitate the transmission of inputted instructions and output results of data generated by various components such as, but not limited to, processor(s) 104 and memory 106.

In an embodiment, the data server 114 may be enabled in a remote cloud server or a co-located server and may include a database (not shown) to store a non-editable schematic illustration, entity metadata, entity classification information, and any other data necessary for the system 100 to determine pipeline flow in a non-editable schematic illustration. In an embodiment, the data server 114 may store data input by an external device 112 or output generated by the computing device 102. In an embodiment, the computing device 102 may be communicatively coupled with the data server 114 through the communication network 110.

In an embodiment, the communication network 110 may be a wired or a wireless network or a combination thereof. The communication network 110 can be implemented as one of the different types of networks, such as but not limited to, ethernet IP network, intranet, local area network (LAN), wide area network (WAN), or a Metropolitan Area Network (MAN). Various devices in the system 100 may be configured to connect to the communication network 110, in accordance with various wired and wireless communication protocols. Examples of such wired and wireless communication protocols may include, but are not limited to, a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols. Further the communication network 110 can include a variety of network devices, including routers, bridges, servers, computing devices, storage devices, and the like.

In an embodiment, the computing device 102 may receive a plurality of inputs from the external device 112 through the communication network 110. In an embodiment, the computing device 102 and the external device 112 may be a computing system, including but not limited to, a laptop computer, a desktop computer, a notebook, a workstation, a server, a portable computer, a handheld, or a mobile device. In an embodiment, the computing device 102 may be, but not limited to, in-built into the external device 112 or may be a standalone computing device.

In an embodiment, the computing device 102 may perform various processing in order to determine pipeline flow in a non-editable schematic illustration. By way of an example, the computing device 102 may receive a non-editable schematic illustration as an input. It should be noted that the input may be indicated or provided by a user via the I/O device 108. In an embodiment, the non-editable schematic illustration may correspond to a Piping and Instrument Diagram (P&ID). In an embodiment, the P&ID may be a schematic illustration of a Piping and Instrument (P&I) system used in industries. In an embodiment, the non-editable schematic illustration may be provided in various formats, including but not limited to, image files (e.g., PNG, JPEG), or document formats (e.g., PDF).

In an embodiment, the non-editable schematic illustration may be pre-processed based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, the non-editable schematic illustration may thereafter be sliced based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, a set of text-region of interests (text-ROIs) corresponding to text data in the non-editable schematic illustration may also be detected based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference.

Thereafter, the computing device 102 may detect a set of object-region of interests (object-ROIs) corresponding to a plurality of object-entities in the non-editable schematic illustration using an object detection technique. In an embodiment, the plurality of object-entities may include, but are not limited to, lines, instruments, valves, fittings, equipment, and connectors. In an embodiment, the lines may include, but are not limited to, O-sign lines, double slash lines, dotted lines, and flow arrows. In an embodiment, the instruments may include, but are not limited to, shared indicators, indicators, computer indicators, and programmable indicators. In an embodiment, the valves may include, but are not limited to, gate valves, check valves, glove valves, butterfly valves, needle valves, and three-way valves. In an embodiment, the fittings may include, but are not limited to, flanges, caps, reducers, hose connections, and spectacle blinds. In an embodiment, the equipment may include, but are not limited to, air coolers, water coolers, and tube and shell exchangers. In an embodiment, the connectors may include, but are not limited to, inlet-outlet (IN-OUT) connectors, rectangle connectors, utility connectors, and drain connectors. In an embodiment, examples of the object detection technique may include, but are not limited to, a cascade classifiers, a support vector machine, a template matching technique, a region-based convolutional neural network (R-CNN), you only look once (YOLO) technique, an EfficientDet technique, a RetinaNet technique, a vision transformers technique, and a CenterNet technique.

In an embodiment, text metadata from the set of text-ROIs may be determined. In an embodiment, the text metadata may include text information, text orientation information and text location information associated to each of the set of text-ROIs. The text metadata may also include equipment-list metadata and line-list metadata. The text metadata from the set of text-ROIs may be determined based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference.

Further, the computing device 102 may determine entity metadata from the set of object-ROls using the object detection technique. In an embodiment, the entity metadata may include object orientation information, class label information, and object location information associated to each of the set of object-ROls. The class label information of each of the set of object-ROIs may be determined based on a classification of each of the set of object-ROls as one of a plurality of predefined classes and as one of a plurality of predefined sub-classes of each of the plurality of predefined classes using the object detection technique. In an embodiment, the plurality of predefined classes may include, but are not limited to, a line, an instrument, a valve, a fitting, an equipment, and a connector. In an embodiment, the plurality of predefined sub-classes of the line may include, but are not limited to, an O-sign line, a double slash sign line, a dotted line, and a flow arrow. In an embodiment, the plurality of predefined sub-classes of the instrument may include, but are not limited to, a shared indicator, an indicator, a computer indicator, and a programmable indicator. In an embodiment, the plurality of predefined sub-classes of the valve may include, but are not limited to, a gate valve, a check valve, a glove valve, a butterfly valve, a needle valve, and a three-way valve. In an embodiment, the plurality of predefined sub-classes of the fitting may include, but are not limited to, a flange, a cap, a reducer, a hose connection, and a spectacle blind. In an embodiment, the plurality of predefined sub-classes of the connector may include, but are not limited to, an inlet-outlet (IN-OUT) connector, a rectangle connector, a utility connector, and a drain connector.

The computing device 102 may determine entity classification information by classifying one or more of the set of object-ROls as one of the plurality of predefined child-classes based on the class label information of a corresponding object-ROI using a Deep Learning (DL) model. In an embodiment, examples of the DL model may include, but are not limited to, a Recurrent Neural Network (RNN), a Bidirectional LSTM, a Convolutional Neural Network (CNN), a transformer-based model, a graph neural network, a sequence-to-sequence (Seqq2Seq) model, a multi-task learning model. The computing device 102, in order to determine the entity classification information of the set of object-ROls sub-classified as the flow arrow, may classify the one or more of the set of object-ROIs sub-classified as the flow arrow as one of the plurality of predefined child-classes that may include a left flow arrow, an up flow arrow, a down flow arrow, a right flow arrow, an up-left flow arrow, an up-right flow arrow, a down-right flow arrow, and a down-left flow arrow. The computing device 102, in order to classify the one or more of the set of object-ROIs sub-classified as the flow arrow, may determine a set of arrow-ROIs from the set of object-ROIs sub-classified as the flow arrow. The computing device 102, in order to classify the one or more of the set of object-ROIs sub-classified as the flow arrow, may further determine a direction of each of the set of arrow-ROIs from a plurality of directions using a direction classification model. In an embodiment, the entity classification information of the set of object-ROIs sub-classified as the flow arrow may be determined based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, the entity classification information of the flow arrows may be stored in a structured data format, such as JSON or XML for further processing.

The computing device 102, in order to determine the entity classification information of the set of object-ROIs sub-classified as the rectangle connector, may classify the one or more of the set of object-ROls sub-classified as the rectangle connector as one of the plurality of predefined child-classes that may include an outlet connector and an inlet connector. The computing device 102, in order to classify the one or more of the set of object-ROIs sub-classified as the rectangle connector, may classify the set of object-ROIs sub-classified as the rectangle connector as one of the outlet connector or the inlet connector based on detection of a set of predefined keywords in the text metadata associated to the one or more of the set of object-ROIs. In an embodiment, the entity classification information of the set of object-ROIs sub-classified as the rectangle connector may be determined based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, the entity classification information of the rectangle connector may be stored in a structured data format, such as JSON or XML for further processing.

The computing device 102, in order to determine the entity classification information of the set of object-ROIs sub-classified as the IN-OUT connector, may classify the one or more of the set of object-ROIs sub-classified as the IN-OUT connector as one of the plurality of predefined child-classes that may include an inlet connector and an outlet connector, using one or more predefined classification rules. In an embodiment, the entity classification information of the set of object-ROls sub-classified as the IN-OUT connector may be determined based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, the entity classification information of the IN-OUT connector may be stored in a structured data format, such as JSON or XML for further processing.

Further, the computing device 102 may determine a set of lines based on determination of a skeletonized image of the non-editable schematic illustration, using an image processing technique. In an embodiment, the set of lines may be determined based on a determination of a set of vertical lines and a set of horizontal lines. In an embodiment, examples of the image processing technique may include, but are not limited to, a Hough Transform technique, an edge detection technique, a line segment detection technique, a radon transform, a line detection technique, and a convolutional neural network (CNN) technique.

Thereafter, the computing device 102 may determine position information of each of the set of lines. The computing device 102 may further determine one or more horizontal line clusters by clustering each of the set of horizontal lines based on the corresponding position information of each of the set of horizontal lines. The computing device 102, in order to determine the one or more horizontal line clusters for each of the set of horizontal lines, may determine a collinearity between one or more of the set of horizontal lines based on the corresponding position information.

Further, the computing device 102 may determine one or more vertical line clusters by clustering each of the set of vertical lines based on the corresponding position information of each of the set of vertical lines. The computing device 102, in order to determine the one or more vertical line clusters for each of the set of vertical lines, may determine a collinearity between one or more of the set of vertical lines based on the corresponding position information.

Thereafter, the computing device 102 may determine continuity information of two lines from one of the one or more horizontal line clusters or the one or more vertical line clusters. The computing device 102, in order to determine the continuity information, may determine a gap between each of the two lines based on the corresponding position information of each of the two lines, a predefined threshold gap distance and based on detection of an object-ROI from the set of object-ROls or at least one line between the two lines. In an embodiment, the two lines may be determined to have same flow direction based on the continuity information.

Further, the computing device 102 may determine one or more pipeline nodes based on a determination of a line intersection between at least one of the set of vertical lines with at least one of the set of horizontal lines. The computing device 102, in order to determine the one or more pipeline nodes, may determine a first centre point at the line intersection between the at least one of the set of horizontal lines with the at least one of the set of vertical lines. Thereafter, the computing device 102, in order to determine the one or more pipeline nodes, may determine a first distance between the first centre point and top-left point of the corresponding horizontal line. Thereafter, the computing device 102, in order to determine the one or more pipeline nodes, may determine a second distance between the first centre point and bottom-right point of the corresponding horizontal line. Thereafter, the computing device 102, in order to determine the one or more pipeline nodes, may determine a third distance between the first centre point and top-left point of the corresponding vertical line. Thereafter, the computing device 102, in order to determine the one or more pipeline nodes, may determine a fourth distance between the first centre point and bottom-right point of the corresponding vertical line. Thereafter, the computing device 102, in order to determine the one or more pipeline nodes, may determine the first centre point as a pipeline node if one of the first distance, the second distance, the third distance and the fourth distance may be within a predefined threshold distance.

Thereafter, the computing device 102, for each of the set of lines, may determine one or more intersection nodes based on intersection of a corresponding line and at least one of the set of object-ROls. Further, the computing device 102, for each of the set of lines, may classify each of the one or more intersection nodes as one of a source node or a sink node based on determination of a flow direction of the corresponding line, and the entity classification information of the at least one of the set of object-ROls. The computing device 102 may further create a directed graph based on the one or more horizontal line clusters, the one or more vertical line clusters, the one or more pipeline nodes and the classification of each of the one or more intersection nodes of each of the set of lines. Accordingly, the computing device 102 may determine the pipeline flow in the non-editable schematic illustration by determining a set of flow-paths based on the directed graph.

Thereafter, an editable schematic illustration may be generated based on the pipeline flow and a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference.

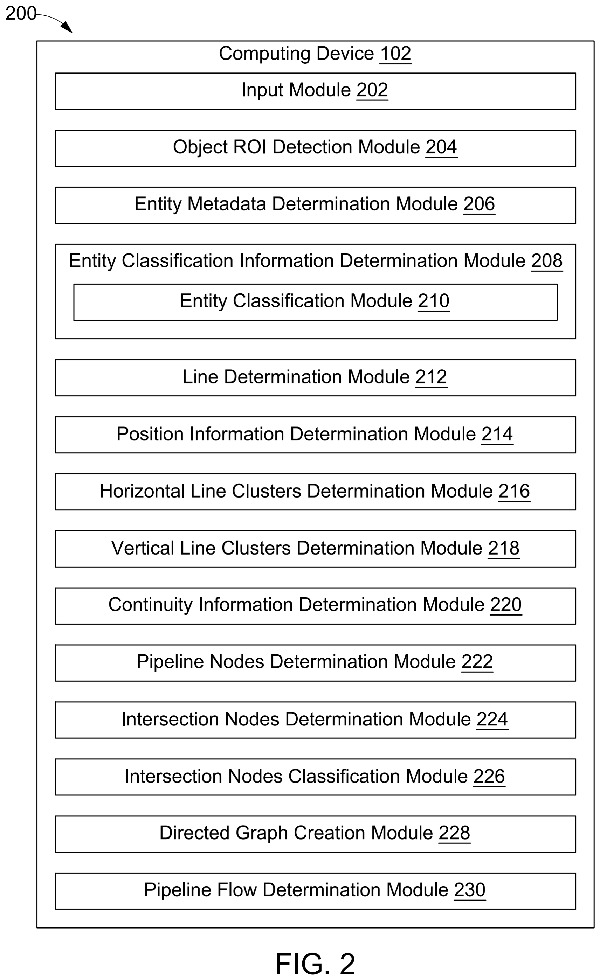

Referring now to **FIG. 2****,** a functional block diagram 200 of the computing device 102 of the exemplary system of **FIG.** 1, is illustrated, in accordance with an embodiment of the present disclosure. The computing device 102 may include an input module 202, an object ROI detection module 204, an entity metadata determination module 206, an entity classification information determination module 208, a line determination module 212, a position information determination module 214, a horizontal line clusters determination module 216, a vertical line clusters determination module 218, a continuity information determination module 220, a pipeline nodes determination module 222, an intersection nodes determination module 224, an intersection nodes classification module 226, a directed graph creation module 228, and a pipeline flow determination module 230.

The input module 202 may receive a non-editable schematic illustration as an input. It should be noted that the input may be indicated or provided by a user via the I/O device 108. In an embodiment, the non-editable schematic illustration may correspond to a Piping and Instrument Diagram (P&ID). In an embodiment, the P&ID may be a schematic illustration of a Piping and Instrument (P&I) system used in industries. In an embodiment, the non-editable schematic illustration may be provided in various formats, including but not limited to, image files (e.g., PNG, JPEG), or document formats (e.g., PDF).

In an embodiment, the non-editable schematic illustration may be pre-processed based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, the non-editable schematic illustration may thereafter be sliced based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, a set of text-region of interests (text-ROIs) corresponding to text data in the non-editable schematic illustration may be detected based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference.

Thereafter, the object ROI detection module 204 may detect a set of object-region of interests (object-ROIs) corresponding to a plurality of object-entities in the non-editable schematic illustration using an object detection technique. In an embodiment, the plurality of object-entities may include, but are not limited to, lines, instruments, valves, fittings, equipment, and connectors. In an embodiment, the lines may include, but are not limited to, O-sign lines, double slash lines, dotted lines, and flow arrows. In an embodiment, the instruments may include, but are not limited to, shared indicators, indicators, computer indicators, and programmable indicators. In an embodiment, the valves may include, but are not limited to, gate valves, check valves, glove valves, butterfly valves, needle valves, and three-way valves. In an embodiment, the fittings may include, but are not limited to, flanges, caps, reducers, hose connections, and spectacle blinds. In an embodiment, the equipment may include, but are not limited to, air coolers, water coolers, and tube and shell exchangers. In an embodiment, the connectors may include, but are not limited to, inlet-outlet (IN-OUT) connectors, rectangle connectors, utility connectors, and drain connectors. In an embodiment, examples of the object detection technique may include, but are not limited to, a cascade classifiers, a support vector machine, a template matching technique, a region-based convolutional neural network (R-CNN), you only look once (YOLO) technique, an EfficientDet technique, a RetinaNet technique, a vision transformers technique, and a CenterNet technique.

In an embodiment, text metadata from the set of text-ROIs may be determined. In an embodiment, the text metadata may include text information, text orientation information and text location information associated to each of the set of text-ROIs. The text metadata may also include equipment-list metadata and line-list metadata. The text metadata from the set of text-ROIs may be determined based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference.

Thereafter, the entity metadata determination module 206 may determine entity metadata from the set of object-ROIs using the object detection technique. In an embodiment, the entity metadata may include object orientation information, class label information, and object location information associated to each of the set of object-ROls. The class label information of each of the set of object-ROIs may be determined based on a classification of each of the set of object-ROls as one of a plurality of predefined classes and as one of a plurality of predefined sub-classes of each of the plurality of predefined classes using the object detection technique. In an embodiment, the plurality of predefined classes may include, but are not limited to, a line, an instrument, a valve, a fitting, an equipment, and a connector. In an embodiment, the plurality of predefined sub-classes of the line may include, but are not limited to, an O-sign line, a double slash sign line, a dotted line, and a flow arrow. In an embodiment, the plurality of predefined sub-classes of the instrument may include, but are not limited to, a shared indicator, an indicator, a computer indicator, and a programmable indicator. In an embodiment, the plurality of predefined sub-classes of the valve may include, but are not limited to, a gate valve, a check valve, a glove valve, a butterfly valve, a needle valve, and a three-way valve. In an embodiment, the plurality of predefined sub-classes of the fitting may include, but are not limited to, a flange, a cap, a reducer, a hose connection, and a spectacle blind. In an embodiment, the plurality of predefined sub-classes of the connector may include, but are not limited to, an inlet-outlet (IN-OUT) connector, a rectangle connector, a utility connector, and a drain connector.

Further, the entity classification information determination module 208 may determine entity classification information of the one or more of the set of object-ROIs. The entity classification information determination module 208 may include an entity classification module 210. The entity classification module 210, in order to determine the entity classification information of the one or more of the set of object-ROIs, may classify the one or more of the set of object-ROIs as one of a plurality of predefined child-classes based on the class label information of a corresponding object-ROI using a Deep Learning (DL) model. In an embodiment, examples of the DL model may include, but are not limited to, a Recurrent Neural Network (RNN), a Bidirectional LSTM, a Convolutional Neural Network (CNN), a transformer-based model, a graph neural network, a sequence-to-sequence (Seqq2Seq) model, a multi-task learning model. In an embodiment, the classified equipment sub-classes may be stored in an intermediate data structure, such as a JSON or XML file, along with their associated metadata.

The entity classification module 210, in order to determine the entity classification information of the set of object-ROIs sub-classified as the flow arrow, may classify the one or more of the set of object-ROIs sub-classified as the flow arrow as one of the plurality of predefined child-classes that may include a left flow arrow, an up flow arrow, a down flow arrow, a right flow arrow, an up-left flow arrow, an up-right flow arrow, a down-right flow arrow, and a down-left flow arrow. The entity classification module 210, in order to classify the one or more of the set of object-ROls sub-classified as the flow arrow, may determine a set of arrow-ROIs from the set of object-ROIs sub-classified as the flow arrow. The entity classification module 210, in order to classify the one or more of the set of object-ROIs sub-classified as the flow arrow, may further determine a direction of each of the set of arrow-ROIs from a plurality of directions using a direction classification model. In an embodiment, the entity classification information of the set of object-ROIs sub-classified as the flow arrow may be determined based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, the entity classification information of the flow arrows may be stored in a structured data format, such as JSON or XML for further processing.

The entity classification module 210, in order to determine the entity classification information of the set of object-ROIs sub-classified as the rectangle connector, may classify the one or more of the set of object-ROIs sub-classified as the rectangle connector as one of the plurality of predefined child-classes that may include an outlet connector and an inlet connector. The entity classification module 210, in order to classify the one or more of the set of object-ROls sub-classified as the rectangle connector, may classify the set of object-ROIs sub-classified as the rectangle connector as one of the outlet connector or the inlet connector based on detection of a set of predefined keywords in the text metadata associated to the one or more of the set of object-ROIs. In an embodiment, the entity classification information of the set of object-ROls sub-classified as the rectangle connector may be determined based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, the entity classification information of the rectangle connector may be stored in a structured data format, such as JSON or XML for further processing.

The entity classification module 210, in order to determine the entity classification information of the set of object-ROIs sub-classified as the IN-OUT connector, may classify the one or more of the set of object-ROls sub-classified as the IN-OUT connector as one of the plurality of predefined child-classes that may include an inlet connector and an outlet connector, using one or more predefined classification rules. In an embodiment, the entity classification information of the set of object-ROls sub-classified as the IN-OUT connector may be determined based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, the entity classification information of the IN-OUT connector may be stored in a structured data format, such as JSON or XML for further processing.

Thereafter, the line determination module 212 may determine a set of lines based on determination of a skeletonized image of the non-editable schematic illustration, using an image processing technique. In an embodiment, the set of lines may be determined based on a determination of a set of vertical lines, a set of horizontal lines, and a set of angular lines. In an embodiment, examples of the image processing technique may include, but are not limited to, a Hough Transform technique, an edge detection technique, a line segment detection technique, a radon transform, a line detection technique, and a convolutional neural network (CNN) technique.

Thereafter, the position information determination module 214 may determine position information of each of the set of lines. In an embodiment, the position information of each of the set of lines may be determined based on their spatial attributes within the non-editable schematic illustration. In an embodiment, the position information may include coordinate-based data representing starting points and end points of each detected line from the set of lines, along with additional geometric attributes such as orientation and length.

Thereafter, the horizontal line clusters determination module 216 may determine one or more horizontal line clusters by clustering each of the set of horizontal lines based on the corresponding position information of each of the set of horizontal lines. The horizontal line clusters determination module 216, in order to determine the one or more horizontal line clusters for each of the set of horizontal lines, may determine a collinearity between one or more of the set of horizontal lines based on the corresponding position information. In an embodiment, the clustering of horizontal lines may be performed by analyzing the collinearity between a reference horizontal line and a current horizontal line along the x-axis. If a newly detected horizontal line is determined to be collinear with an existing reference horizontal line, the newly detected line may be added to the same cluster. Conversely, if the detected line does not exhibit collinearity, a new horizontal line cluster may be formed to distinguish the non-collinear line from the previously clustered set. In an embodiment, the horizontal line clusters determination module 216 may iterate through each detected horizontal line and compare it against other horizontal lines in the non-editable schematic illustration to systematically assign cluster identifiers. In an exemplary embodiment, the clustering process may involve determining whether the y-coordinates of two horizontal lines overlap within a predefined tolerance threshold. If the overlapping condition is satisfied, the two lines may be assigned to the same cluster. Furthermore, within each horizontal line cluster, the set of horizontal lines may be sorted based on their x-coordinate positions and a cluster ID may be assigned to each of the set of horizontal lines within each horizontal line cluster to maintain structured connectivity between each of the set of horizontal lines.

Further, the vertical line clusters determination module 218 may determine one or more vertical line clusters by clustering each of the set of vertical lines based on the corresponding position information of each of the set of vertical lines. The vertical line clusters determination module 218, in order to determine the one or more vertical line clusters for each of the set of vertical lines, may determine a collinearity between one or more of the set of vertical lines based on the corresponding position information. In an embodiment, the clustering of vertical lines may be determined by evaluating the collinearity between a reference vertical line and a current vertical line along the y-axis. If a newly detected vertical line is determined to be collinear with an existing reference vertical line, the newly detected vertical line may be assigned to the same cluster. Otherwise, a new vertical line cluster may be formed to account for the non-collinear vertical line. In an exemplary embodiment, the clustering determination may involve checking whether the x-coordinates of two vertical lines overlap within a predefined threshold. If the overlapping condition is satisfied, the two vertical lines may be grouped under the same cluster identifier. The vertical line clusters determination module 218 may perform an iterative comparison of each vertical line against all other vertical lines in the non-editable schematic. Within each vertical line cluster, the set of vertical lines may be sorted based on their y-coordinate positions and a cluster ID may be assigned to each of the set of vertical lines within each vertical line cluster to maintain a structured connectivity between each of the set of vertical lines.

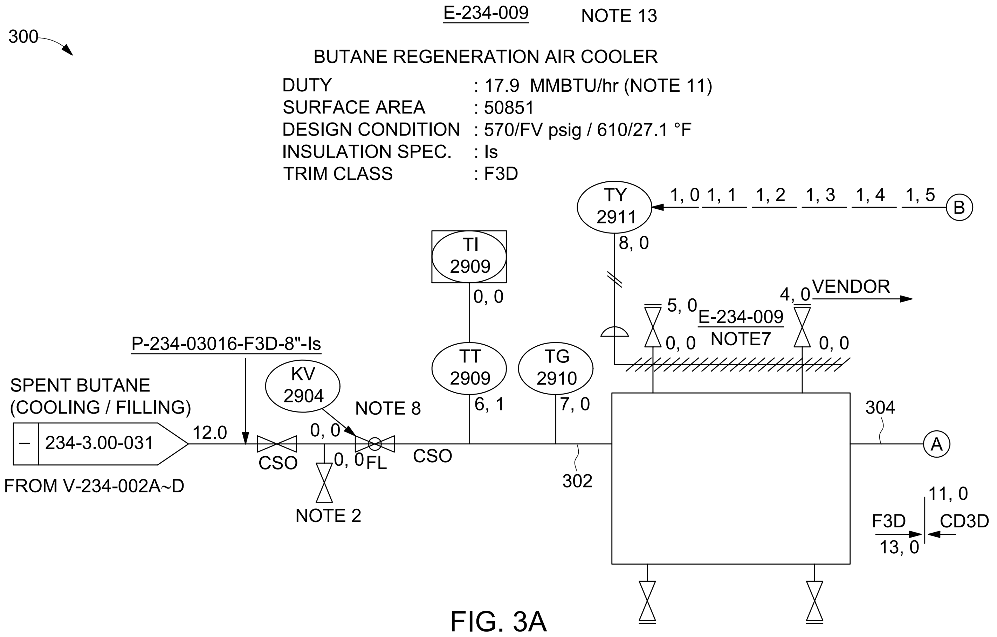

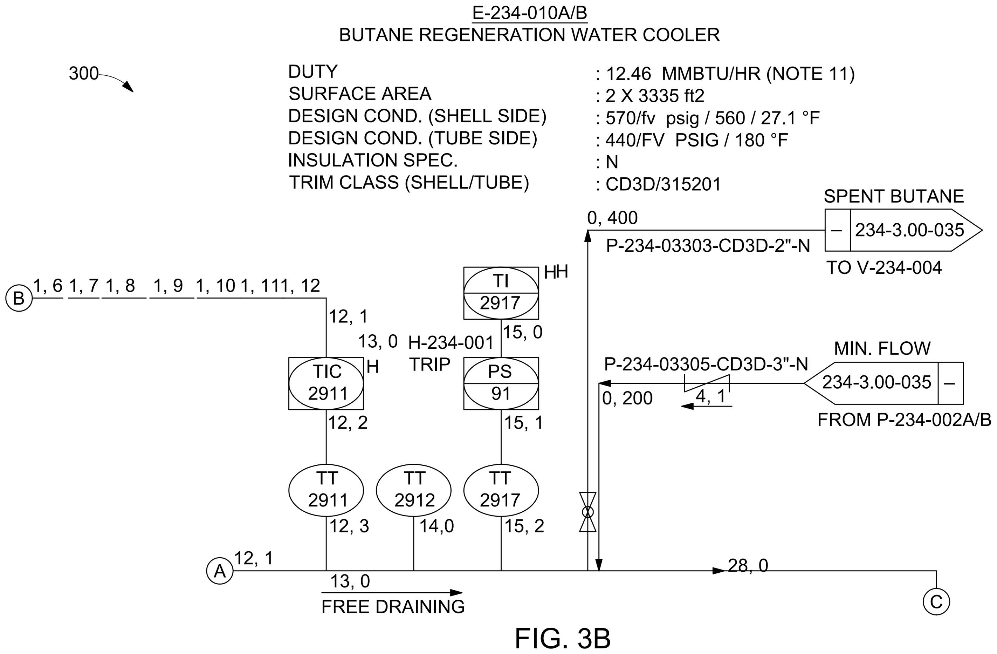

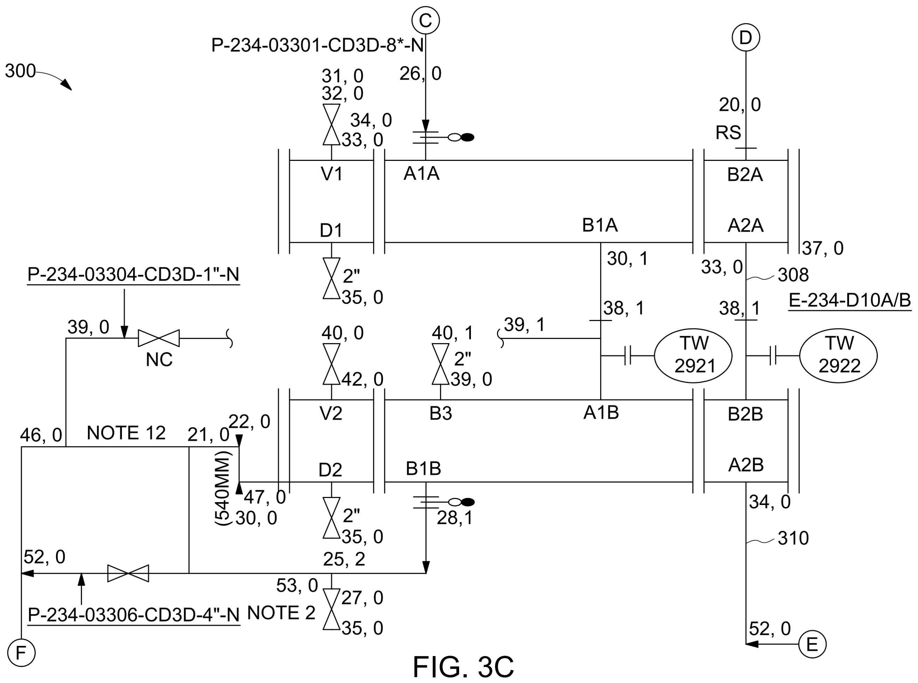

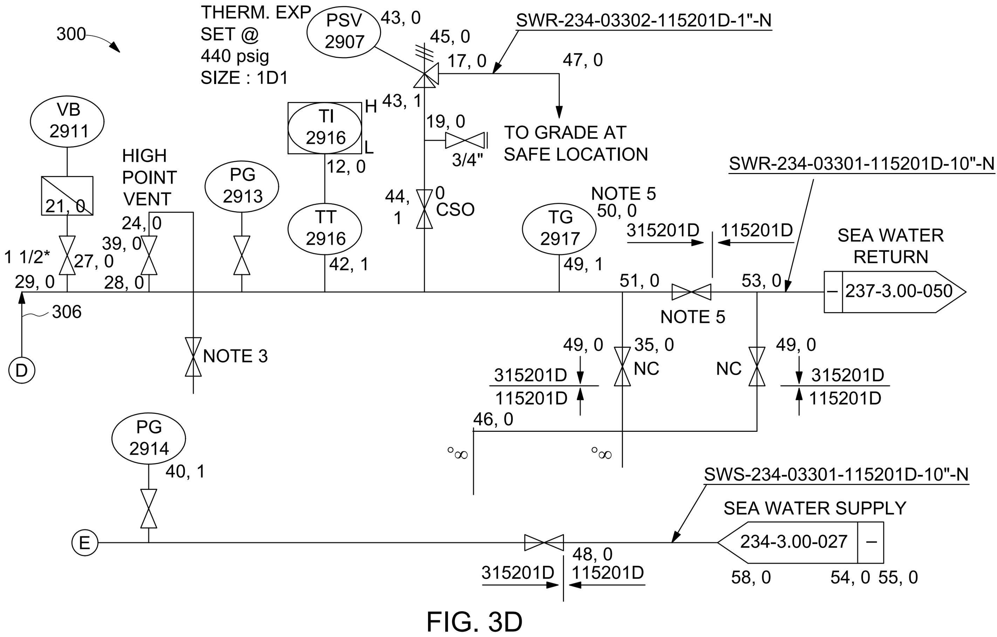

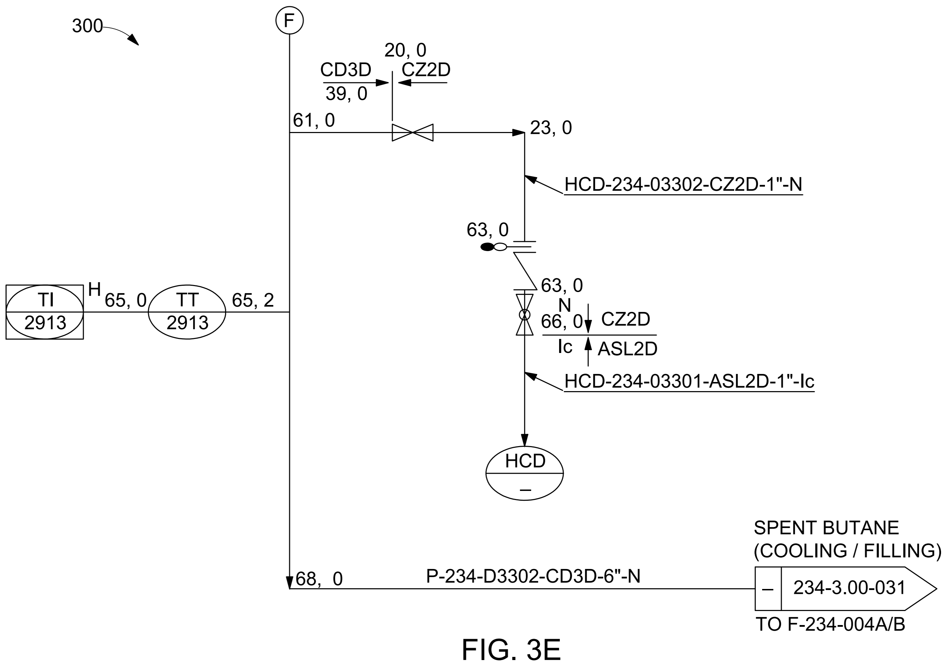

Referring now to **FIG. 3****,** a non-editable schematic illustration 300 depicting clustering of a set of lines, is illustrated, in accordance with an embodiment of the present disclosure. The non-editable schematic illustration 300 may demonstrate clustering of the detected set of horizontal lines and the set of vertical lines within the non-editable schematic illustration 300. The set of horizontal lines and the set of vertical lines in the non-editable schematic illustration 300 may be extracted and their position information may be determined based on their spatial attributes, including starting coordinates and end coordinates, orientation, and length of each of the set of horizontal lines and each of the set of vertical lines. The set of horizontal lines and the set of vertical lines may further subsequently group into their respective horizontal line clusters and vertical line clusters.

In an embodiment, the position information determination module 214 may analyse and assign coordinate-based data to each detected line from the set of lines to enable structured clustering. The horizontal line clusters determination module 216 is configured to clusters the set of horizontal lines based on collinearity along the x-axis to ensure that lines exhibiting spatial alignment are grouped into the same horizontal line cluster. Similarly, the vertical line clusters determination module 218 clusters the set of vertical lines by identifying collinear segments along the y-axis to form vertical line clusters.

**In** **FIG. 3****,** horizontal lines 302 and 304 are determined to be collinear along the x-axis, thereby forming a horizontal line cluster. The clustering process involves evaluating whether the y-coordinates of horizontal lines 302 and 304 overlap within a predefined threshold. If the overlap condition is met, the horizontal lines 302 and 304 may be assigned to the same horizontal cluster. Similarly, each of the set of horizontal lines visible throughout the non-editable schematic illustration 300 may be grouped into horizontal line clusters in accordance with their alignment and spatial proximity. In an embodiment, to ensure consistency and structured representation, each detected horizontal line within the same horizontal line cluster is assigned a common cluster identifier. This cluster ID uniquely represents all overlapping and collinear horizontal lines within a given horizontal line cluster.

Likewise, the vertical lines 306, 308, and 310 may be detected as collinear along the y-axis and therefore grouped into a vertical line cluster. The determination of vertical line clusters involves checking whether the x-coordinates of detected vertical lines overlap within a predefined threshold. If the overlap condition is met, the vertical lines are assigned the same cluster identifier. Similarly, each of the set of vertical lines visible throughout the non-editable schematic illustration 300 may be grouped into vertical line clusters based on their alignment and spatial proximity. In an embodiment, to ensure consistency and structured representation, each detected vertical line within the same vertical line cluster is assigned a common cluster identifier. This cluster ID uniquely represents all overlapping and collinear vertical lines within a given vertical line cluster.

Referring back to **FIG. 2****,** the continuity information determination module 220 may determine continuity information of two lines from one of the one or more horizontal line clusters or the one or more vertical line clusters. The continuity information determination module 220, in order to determine the continuity information, may determine a gap between each of the two lines based on the corresponding position information of each of the two lines, a predefined threshold gap distance and based on detection of an object-ROI from the set of object-ROIs or at least one line between the two lines.

In an embodiment, the two lines may be determined to have same flow direction based on the continuity information. In an embodiment, the continuity information determination process ensures that disconnected or fragmented lines within a cluster are evaluated for connectivity and, if necessary, are joined based on predefined conditions. In an embodiment, the continuity information determination module 220 may analyse the spatial relationship between two lines to establish whether they are part of a continuous pipeline segment within the non-editable schematic illustration 300. In an embodiment, the continuity information determination module 220 may determine a gap between two adjacent lines from one of the one or more horizontal line clusters or the one or more vertical line clusters using their position information. The detected gap may be compared against a predefined threshold gap distance, which defines the maximum allowable separation between two collinear or aligned lines for them to be considered continuous. If the measured gap between two lines is within the predefined threshold gap distance, the two lines may be joined to ensure pipeline continuity within the non-editable schematic illustration 300. Additionally, the continuity information determination module 220 may determine whether any object-region of interest (object-ROI), such as valves, fittings, or other pipeline components, may be present between the two lines. If an object-ROI is detected within the gap, the continuity information determination module 220 may classify the two lines as an intentional separation due to the presence of an intermediate object (i.e., pipeline component). In such cases, the detected object-ROI may be associated with pipeline flow path within the non-editable schematic illustration 300.

In an embodiment, the continuity information determination module 220 may detect a gap representing the spatial separation between two collinear horizontal lines or two collinear vertical lines. The continuity information determination module 220 may then perform an Intersection over Union (IoU) calculation to determine whether an object-ROI is present within the detected gap. If an object-ROI such as a valve or fitting is identified within the gap, the continuity information determination module 220 may update the pipeline flow path by associating the detected object-ROI with the pipeline flow path. If no object-ROI is detected between the two lines, the continuity information determination module 220 may further analyse whether the detected gap represents an over-bridge line case. In an embodiment, if only one vertical line intersects between two horizontal lines and the distance from the two extreme ends of each of the two horizontal lines to the vertical line is equal, the vertical line may be classified as an over-bridge line which indicates that a pipeline passing over another section rather than a true intersection.

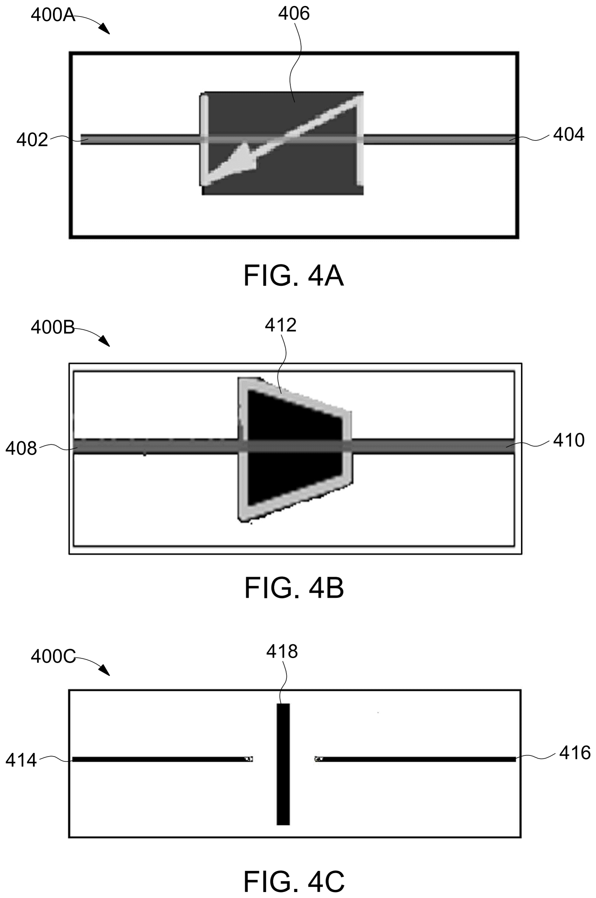

Referring now to **FIG. 4A****,** a schematic representation 400A illustrating determination of continuity information of two lines 402 and 404 based on detection of an object-ROI 406 from the set of object ROIs, is depicted, in accordance with an embodiment of the present disclosure. **FIG. 4A** demonstrates how a detected object-ROI 406 classified as the valve, influences the continuity determination of the two horizontal lines 402 and 404 corresponding to a horizontal line cluster within the non-editable schematic illustration 300.

In an embodiment, the continuity information determination module 220 may analyse the two horizontal lines 402 and 404 to determine whether they belong to a same pipeline segment. As part of this process, the continuity information determination module 220 may determine the presence of the object-ROI 406, which interrupts the direct connectivity between the two horizontal lines 402 and 404. The object-ROI 406 classified as the valve, which is an integral component of the P&I system, influencing fluid control and flow direction. The continuity information determination module 220 may determine the valve as a pipeline component, thereby establishing continuity between the two horizontal lines 402 and 404, despite the visual separation in the schematic representation 400A. In an embodiment, to determine continuity, the continuity information determination module 220 may utilize Intersection over Union (IoU) techniques to assess whether the object-ROI 406 is positioned within the gap between the two horizontal lines 402 and 404. If the detected object overlaps or intersects with the expected pipeline path, the continuity information determination module 220 may associate the object with the pipeline flow path. In an embodiment, if the object-ROI 406 is not detected, and no other pipeline components are found between the two horizontal lines 402 and 404, the continuity information determination module 220 may determine the two horizontal lines 402 and 404 as disconnected segments or may analyse additional parameters. In an embodiment, the continuity information determination module 220 may also account for various sub-classes of the object-ROI classified as the valve. These sub-classes may include, but are not limited to, the gate valve, the check valve, the globe valve, the butterfly valve, the needle valve, the three-way valve, and other similar valves typically encountered in the P&I system. When any such object-ROI representing a sub-class component is detected between two horizontal lines, the continuity information determination module 220 may infer that these line segments are part of the same pipeline and establish connectivity accordingly. For example, if a gate valve is detected between two horizontal lines, it may be determined that the gate valve facilitates joining of the horizontal lines, and thus, continuity is confirmed.

In an embodiment, similar techniques may be applied to vertical lines. The continuity information determination module 220 may analyse the set of vertical lines to determine if they belong to same vertical pipeline segment. If two vertical lines are visually separated but connected through an object-ROI classified as the valve, the continuity information determination module 220 may utilize similar techniques as for the horizontal lines to confirm continuity between the two vertical lines.

Referring now to **FIG. 4B****,** a schematic representation 400B illustrating determination of continuity information of two lines 408 and 410 based on detection of an object-ROI 412 from the set of object ROIs, is depicted, in accordance with another embodiment of the present disclosure. **FIG. 4B** demonstrates how a detected object-ROI 412 classified as the fitting, influences the continuity determination of the two horizontal lines 408 and 410 corresponding to a horizontal line cluster within the non-editable schematic illustration 300. In an embodiment, the continuity information determination module 220 may analyse the two horizontal lines 408 and 410 to determine whether they belong to a same pipeline segment. As part of this process, the continuity information determination module 220 may determine the presence of the object-ROI 412, which represents a fitting, which interrupts the direct connectivity between the two horizontal lines 408 and 410.

The object-ROI 412 represents a fitting, which is an integral component of the pipeline, influencing fluid control and flow direction. The continuity information determination module 220 determines the fitting as a pipeline component, thereby establishing continuity between horizontal lines 408 and 410, despite the visual separation in the schematic representation 400B. In an embodiment, to determine continuity, the continuity information determination module 220 utilizes Intersection over Union (IoU) techniques to assess whether the object-ROI 412 is positioned within the gap between the two horizontal lines 408 and 410. If the detected object overlaps or intersects with the expected pipeline path, the continuity information determination module 220 may associate the object with the pipeline flow path. In an embodiment, if the object-ROI 412 is not detected, and no other pipeline components are found between the two horizontal lines 408 and 410, the continuity information determination module 220 may determine the two horizontal lines 408 and 410 as disconnected segments or may analyse additional parameters.

In an embodiment, the continuity information determination module 220 may also account for various sub-classes of the object-ROI classified as the fitting. These sub-classes may include, but are not limited to, the flange, the cap, the reducer, the hose connection, the spectacle blind, and other similar fittings typically encountered in the P&I system. When any such object-ROI representing a sub-class component is detected between two horizontal lines, the continuity information determination module 220 may infer that these line segments are part of the same pipeline and establish connectivity accordingly. For example, if a flange is detected between two horizontal lines, it may be determined that the flange facilitates joining of the two horizontal lines, and this, continuity is confirmed.

In an embodiment, similar techniques may be applied to vertical lines. The continuity information determination module 220 may analyse the set of vertical lines to determine if they belong to same vertical pipeline segment. If two vertical lines are visually separated but connected through an object-ROI classified as the fitting, the continuity information determination module 220 may utilize similar techniques as for the horizontal lines to confirm continuity between the two vertical lines.

Referring now to **FIG. 4C****,** a schematic representation 400C illustrating determination of continuity information of two lines 414 and 416 based on detection of one line 418 between the two lines 414 and 416, is depicted, in accordance with an embodiment of the present disclosure. **FIG. 4C** demonstrates a scenario in which one vertical line 418 is detected between the two horizontal lines 414 and 416. This configuration is analyzed to determine whether the one vertical line 418 represents an over-bridge line or an actual pipeline intersection within the non-editable schematic illustration 300.

In an embodiment, the continuity information determination module 220 may evaluate whether the one vertical line 418 is an integral part of the pipeline connection or simply a structural overpass. The determination may involve analyzing the relative positioning of the one vertical line 418 with respect to the two horizontal lines 414 and 416. If the distance between the extreme ends of each of the two horizontal lines 414 and 416 is equal, and the one vertical line 418 is the only line intersecting between them, the continuity information determination module 220 may classify the one vertical line 418 as an over-bridge line. An over-bridge line represents a pipeline that passes over another section rather than forming a true connection between the intersecting segments. This classification is crucial for differentiating actual intersections from non-intersecting overlapping lines in the non-editable schematic illustration 300. In an exemplary embodiment, the continuity information determination module 220 may utilize coordinate-based analysis to measure the distance between the endpoints of the two horizontal lines 414 and 416. If the measured distance on both sides of the vertical line 418 is within a predefined tolerance threshold, the continuity information determination module 220 assigns the one vertical line 418 as an over-bridge line. The over-bridge line represents a pipeline that passes over another section rather than forming a true connection between the intersecting segments.

Referring back to **FIG. 2****,** the pipeline nodes determination module 222 may determine one or more pipeline nodes based on a determination of a line intersection between at least one of the set of vertical lines with at least one of the set of horizontal lines. The pipeline nodes determination module 222, in order to determine the one or more pipeline nodes, may determine a first centre point at the line intersection between the at least one of the set of horizontal lines with the at least one of the set of vertical lines. The pipeline flow determination module 222, in order to determine the one or more pipeline nodes, may determine a first distance between the first centre point and top-left point of the corresponding horizontal line. The pipeline flow determination module 222, in order to determine the one or more pipeline nodes, may determine a second distance between the first centre point and bottom-right point of the corresponding horizontal line. The pipeline flow determination module 222 thereafter, in order to determine the one or more pipeline nodes, may determine a third distance between the first centre point and top-left point of the corresponding vertical line. The pipeline flow determination module 222 thereafter, in order to determine the one or more pipeline nodes, may determine a fourth distance between the first centre point and bottom-right point of the corresponding vertical line. The pipeline flow determination module 222 thereafter, in order to determine the one or more pipeline nodes, may determine the first centre point as a pipeline node if one of the first distance, the second distance, the third distance, and the fourth distance may be within a predefined threshold distance.

In an exemplary embodiment, the pipeline nodes determination module 222 iterates through a dataset of horizontal lines and vertical lines extracted from the non-editable schematic illustration 300. The pipeline nodes determination module 222 systematically compares each horizontal line with each vertical line to identify potential intersections that may indicate pipeline junctions or connection points. For instance, consider a horizontal line H1 with coordinates spanning (x1, y1) to (x2, y1) and a vertical line V1 with coordinates spanning (x3, y3) to (x3, y4). The pipeline nodes determination module 222 determines whether an intersection exists between H1 and V1 by detecting the bounding box overlap between the two lines based on an intersection of their coordinates. Upon detecting an intersection, the pipeline nodes determination module 222 determines a first centre point (Cx, Cy) at the intersection of the horizontal line H1 and the vertical line V1. Thereafter, the pipeline flow determination module 222 computes a set of distances from the first centre point (Cx, Cy) to key reference points along the intersecting lines to verify the validity of the pipeline node. These distances include:
**D1:** The distance between (Cx, Cy) and the top-left point of the horizontal line H1.
**D2:** The distance between (Cx, Cy) and the bottom-right point of the horizontal line H1.
**D3:** The distance between (Cx, Cy) and the top-left point of the vertical line V1.
**D4:** The distance between (Cx, Cy) and the bottom-right point of the vertical line V1.

If any of the D1, D2, D3, or D4 is determined to be within a predefined threshold distance, the pipeline flow determination module 222 confirms (Cx, Cy) as a pipeline node. The validated pipeline node is then assigned a unique identifier and stored in a structured data format (e.g., JSON, XML) for subsequent graph-based connectivity analysis.

Thereafter, the intersection nodes determination module 224, for each of the set of lines, may determine one or more intersection nodes based on intersection of a corresponding line and at least one of the set of object-ROls. Further, the intersection nodes classification module 226, for each of the set of lines, may classify each of the one or more intersection nodes as one of a source node or a sink node based on determination of a flow direction of the corresponding line, and the entity classification information of the at least one of the set of object-ROls.

In an exemplary embodiment, consider a scenario where a horizontal line H1 intersects with an object-ROI sub-classified as the IN-OUT connector. The intersection nodes determination module 224 may first calculate an intersection of the object-ROI sub-classified as the IN-OUT connector with the line H1. Further, the intersection nodes classification module 226 analyses the text metadata and the entity classification information associated with the IN-OUT connector to determine whether it functions as an inlet connector (i.e., entry or source point) or as an outlet connector (i.e., exit or sink point). If the entity metadata contains the keyword "FROM", the object-ROI is classified as a source node, indicating that fluid originates at this point. Conversely, if the entity metadata contains the keyword "TO", the intersection nodes classification module 206 classifies the object-ROI as a sink node, signifying that fluid flow terminates at this point. And if the flow direction of the line is identified as an inlet (For example, if the connector or equipment at the intersection is identified as an inlet), the intersection nodes classification module 206 may classify the intersection node as a source node. If the flow direction of the line if identified as an outlet (For example, if the connector or equipment at the intersection is identified as an outlet), the intersection nodes classification module 206 may classify the intersection node as a sink node. In another embodiment, if a rectangular connector is detected at a horizontal line H2, the intersection nodes determination module 224 performs a similar classification. The bounding box of the rectangular connector is analyzed, and its spatial position is compared to the flow direction of the intersecting line. If the rectangular connector is positioned at the start of the horizontal line H2, it is classified as a source node. If the rectangular connector is positioned at the end of the horizontal line V1, it is classified as a sink node.

In an embodiment, if a line from the set of horizontal lines or the set of vertical lines does not have a pre-assigned flow direction and intersects with a detected object-ROI, the intersection nodes classification module 226 determines the flow direction by performing a structured analysis using geometric positioning and spatial relationships. The intersection nodes classification module 226 first identifies the intersection area between the line and the object-ROI and determines the centre point (Cx, Cy) of the intersection using a geometric analysis of the bounding box of the intersection. To infer the flow direction, the intersection nodes classification module 226 may compute a Euclidean distances from the centre point (Cx, Cy) to the following points of the bounding box of the line: Top-left (tl) corner of the line, and Bottom-right (br) corner of the line. These distances, denoted as hz_tl_distance and hz_br_distance to provide a relative positioning reference to determine which end of the line is closer to the intersection. The intersection nodes classification module 226 may further compare the distances. If, hz_tl_distance is less than hz_br_distance, the flow is inferred from the top-left corner towards the bottom-right corner (LEFT to RIGHT). If, hz_br_distance is less than hz_tl_distance, the flow is inferred from the bottom-right corner towards the top-left corner (RIGHT to LEFT). Once the flow direction is determined, the intersection nodes classification module 226 creates a new intersection node at (Cx, Cy) and may associate it with the object-ROI and its corresponding line. In an embodiment, for certain connectors such as Utility connectors and Drain connectors, the intersection nodes classification module 226 may compare x-position of the connector with start position of the line to determine if it is upstream or downstream. If the connector is upstream, the connector is classified as a source node and if the connector is downstream, the connector is classified as a sink node.

In an embodiment, if the line intersects with an object-ROI classified as the equipment (e.g., a pump or a cooler), the classification of the intersection nodes is similar as the classification of the connectors, with addition considerations for both the horizontal lines and the vertical lines. The intersection nodes determination module 224 may first iterate over all the object-ROIs classified as the equipment detected in the non-editable schematic illustration 300 and may check for intersections with the respective horizontal line or the vertical line. When an intersection is detected, the intersection nodes determination module 224 may calculate a centre of the intersection between the equipment and the line. If the flow direction of the line is not yet set, the intersection nodes classification module 226 may compute the distances from this centre point to the endpoints of the intersecting line (e.g., top-left and bottom-right for the horizontal line). Based on which endpoint is closer to the intersection point, the intersection nodes classification module 226 may assign a flow direction (LEFT or RIGHT for horizontal lines) and may create an intersection node at that point. The node may be then classified as a source node or a sink node depending on the positional relationship of the equipment relative to the line. For example, if the equipment is at the upstream end of the intersection node, the intersection node may be classified as a source node, and it the equipment is at the downstream end of the intersection node, the intersection node may be classified as a sink node.

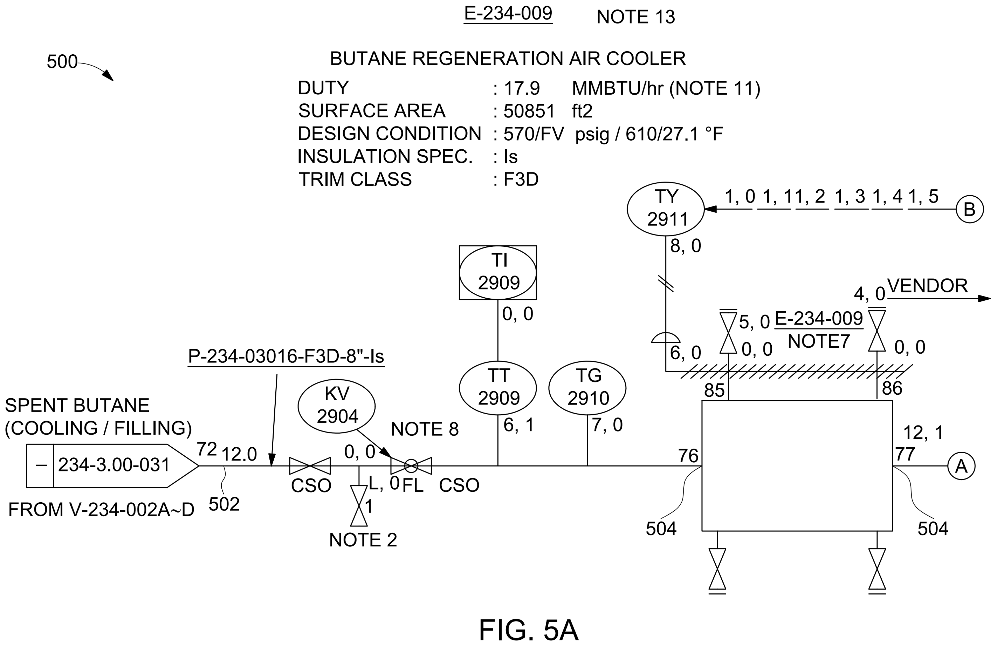

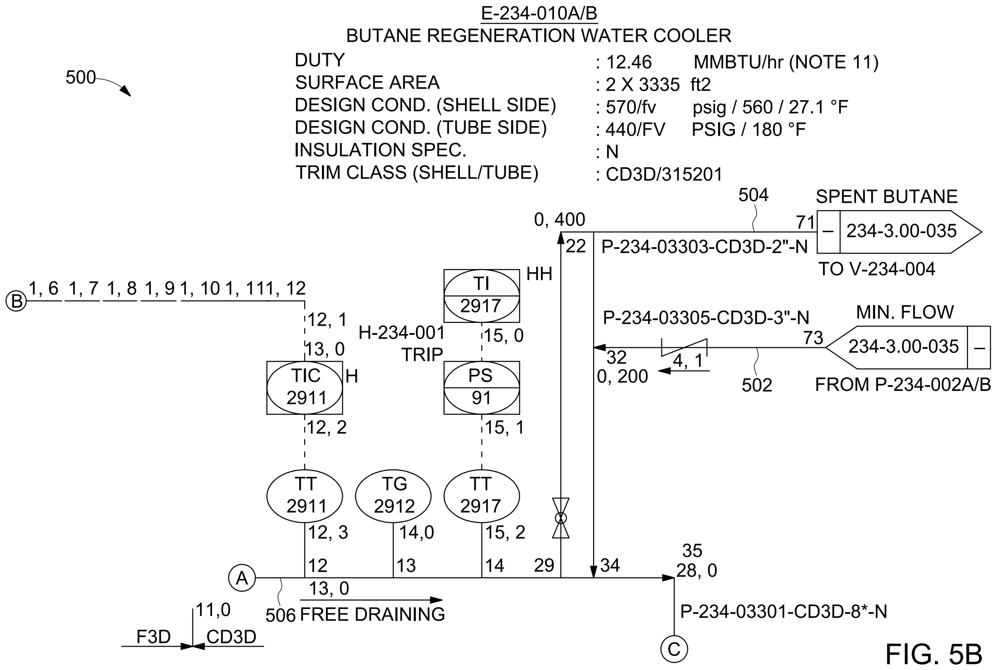

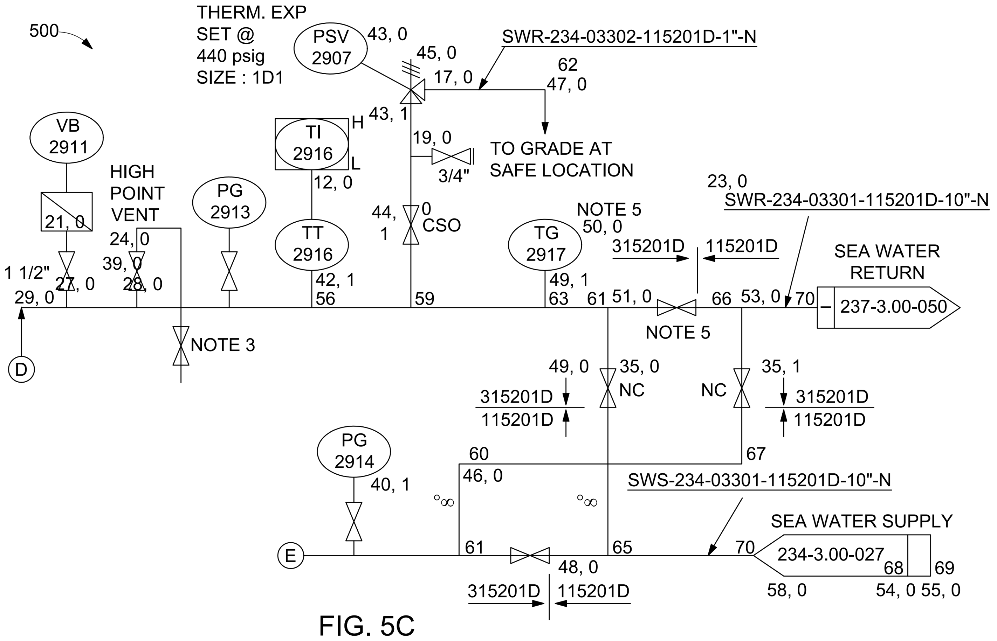

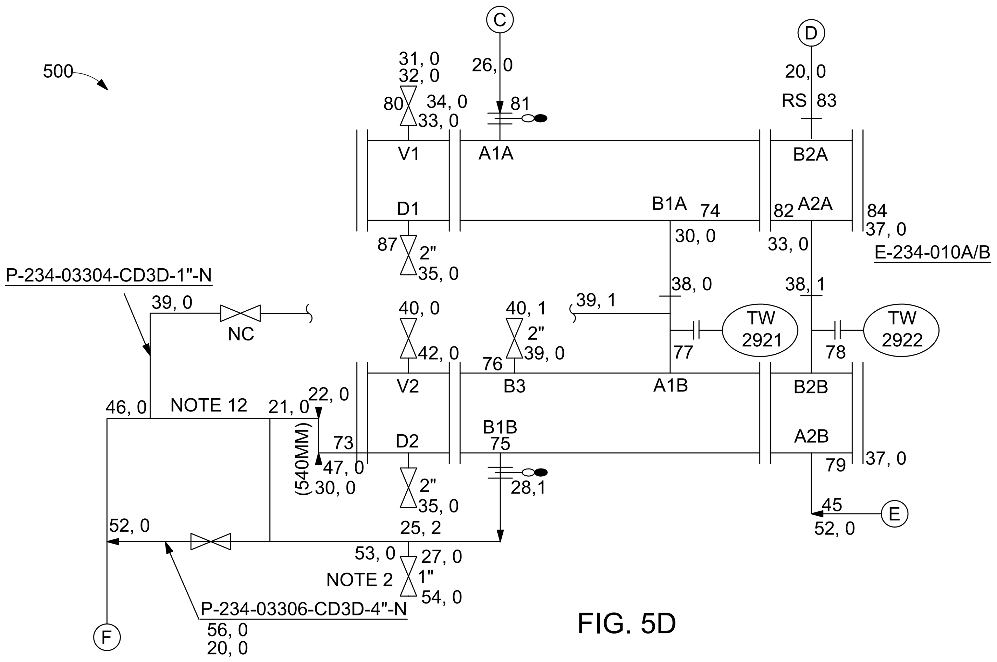

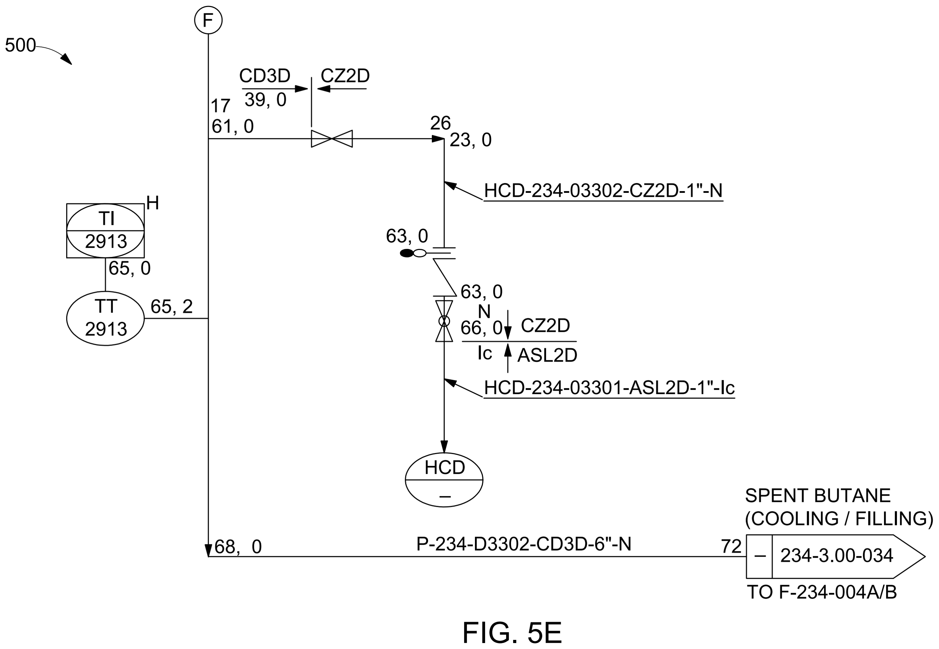

Referring now to **FIG. 5****,** a schematic representation illustrating determination of pipeline nodes in the non-editable schematic illustration 300, is depicted, in accordance with an embodiment of the present disclosure. The pipeline nodes determination module 222 processes the set of detected horizontal lines and the set of vertical lines within the non-editable schematic illustration 300 to identify intersection points where these lines connect. These intersection points serve as pipeline nodes that define structural connections within the P&I system. In an embodiment, the pipeline nodes determination module 222 detects pipeline nodes by analyzing intersections between the set of horizontal lines and the set of vertical lines. The pipeline nodes determination module 222 may first determine a first centre point at the intersection of at least one vertical line and one horizontal line. Thereafter, the pipeline nodes determination module 222 may determine positional distances from this first centre point to critical reference points, such as the top-left point and the bottom-right point of the horizontal line and the top-left point and the bottom-right point of the vertical line. If any of these calculated distances fall within a predefined threshold distance, the intersection point is designated as a pipeline node. The pipeline node 506, as depicted in **FIG. 5****,** serves as an example of such an intersection where a horizontal line and a vertical line converge.

Further, the intersection nodes determination module 224 may determine intersection nodes where the set of horizontal lines or the set of vertical lines interact with object-ROIs classified as the equipment, the connectors, or the valves. These intersection nodes are then classified by the intersection nodes classification module 226 as either source nodes or sink nodes based on the flow direction of the corresponding lines and the entity classification of the corresponding object-ROI. In **FIG. 5****,** source node 502 represents a point where the fluid flow originates, such as an inlet, pump, or supply connection. Similarly, sink node 504 signifies a point where the fluid flow terminates, such as an outlet, discharge point, or storage tank connection. In **FIG. 5****,** the source node 502 is positioned at the intersection of a horizontal line and an inlet connector, which is why the intersection point is classified as a source node. This classification is based on the flow direction of the corresponding horizontal line, which in this case, is directed inside the P&I system, indicating that the fluid is being introduced from an external source such as a pump or an external supply line. Similarly, the sink node 504 is determined at the intersection of a horizontal line and a water cooler, signifying a termination point of fluid flow. The flow direction of the corresponding horizontal line at this intersection indicates an exit path, where the fluid is either discharged, cooled, or further processed.

Referring back to **FIG. 2****,** the directed graph creation module 228 may create a directed graph based on the one or more horizontal line clusters, the one or more vertical line clusters, the one or more pipeline nodes and the classification of each of the one or more intersection nodes of each of the set of lines.

In an embodiment, the directed graph creation module 228 constructs the directed graph of the flow network by analyzing spatial relationships between the detected pipeline nodes and the detected intersection nodes and interconnecting them based on their flow direction. The process begins with identifying and adding nodes to the graph and then establishing edges between them to ensure logical connectivity. The directed graph creation module 228 may iterate over each detected pipeline node and each classified intersection node in the non-editable schematic illustration 300, where a node from the one or more pipeline nodes or the one or more intersection nodes may represent an entity such as a flow line intersection, an equipment connection, or a pipeline transition point. Each node from the one or more pipeline nodes or the one or more intersection nodes is added to the graph with a unique identifier, and a data structure is initialized to track its potential edges in the four cardinal directions (0° for right, 90° for up, 180° for left, and 270° for down). For each node from the one or more pipeline nodes or the one or more intersection nodes, the directed graph creation module 228 may compare it with every other node in the non-editable schematic illustration 300 to determine if they share a common flow line segment either horizontal or vertical. If two nodes exist on the same horizontal line, the directed graph creation module 228 may evaluate their spatial positioning and flow direction to decide whether to create an edge between them. The angle of connection is computed, and it is adjusted to align with the nearest multiple of 90° to standardize directional mapping. A connection is only established if the flow direction permits to ensure that edges align with the actual fluid movement rather than creating bidirectional or redundant links. If two nodes belong to a vertical flow line, the directed graph creation module 228 follows a similar approach. The relative positions of the nodes along the vertical axis are analyzed, and their directionality is determined as upward or downward. To further refine connectivity, the module ensures that only the closest node in each direction is linked. If multiple candidate nodes exist in the same direction, the directed graph creation module 228 calculates their respective distances and retains the nearest node as the connected edge to avoid unnecessary redundancy in the graph. Once all nodes are processed, the directed graph creation module 228 finalizes the edge assignments, integrating the pipeline nodes and classified intersection nodes to establish a complete directed graph.

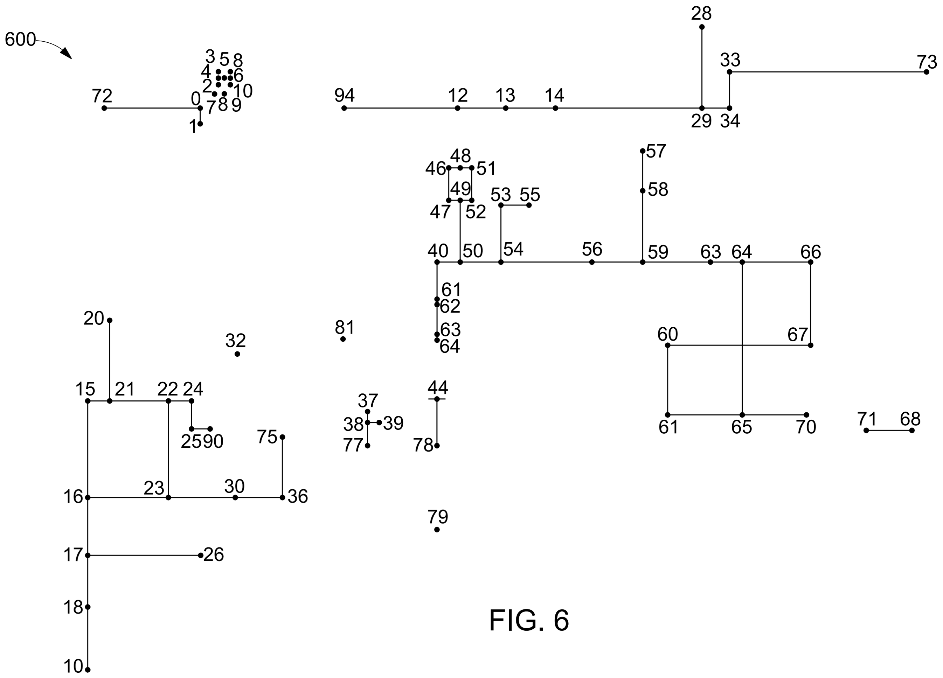

Referring now to **FIG. 6****,** a directed graph 600 is illustrated, in accordance with an embodiment of the present disclosure. The directed graph 600 visually represents the pipeline flow network derived from the non-editable schematic illustration 600. This directed graph 600 may be generated based on the nodes and edges identified by the directed graph creation module 228 to structure the flow path within the P&I system. In an embodiment, the directed graph 600 is constructed by utilizing the set of horizontal and the vertical line clusters, the pipeline nodes, and the classified intersection nodes, each extracted from the non-editable schematic illustration 300. The nodes in the directed graph 600 correspond to key locations within the fluid network, such as junction points, connectors, equipment locations, and endpoints of pipelines. The edges between the nodes represent the direction of fluid flow, ensuring that the network adheres to the defined flow dynamics. For example, the directed graph 600 may include source nodes, sink nodes, and pipeline nodes derived from the pipeline nodes determination module 222 and the intersection nodes classification module 226. The source nodes represent inlet points, such as pumps or fluid entry locations, while the sink nodes indicate outlet points, such as tanks or discharge locations. Additionally, pipeline nodes are placed at junctions where horizontal line and vertical line meet.

Referring back to **FIG. 2****,** the pipeline flow determination module 230 may determine the pipeline flow in the non-editable schematic illustration by determining a set of flow-paths based on the directed graph. In an embodiment, the set of flow-paths can be stored in a structure data format such as JSON or XML file.

In an exemplary embodiment, the pipeline flow determination module 230 processes the directed graph 600, which consists of nodes and edges, to establish the connectivity between different pipeline components from source nodes to sink nodes. Initially, the pipeline flow determination module 230 identifies unique flow paths by traversing the directed graph 600 to extract unique flow paths. Each flow path represents a continuous sequence of interconnected nodes, where each node corresponds to an entity such as equipment, connectors, and flow lines. The traversal begins from a source node, which serves as an entry point such as a pump or inlet and follows the directed edges to trace the complete pipeline flow path until reaching a sink node, which serves as an exit point, such as a storage tank or discharge outlet. During the traversal, the pipeline flow determination module 230 classifies each node along the path based on its function and connectivity. If a node corresponds to an equipment entity, such as a heat exchanger, valve, or compressor, the pipeline flow determination module 230 extracts metadata, including the equipment tag and class label, to associate it with the flow path. Similarly, if a node corresponds to a connector entity, such as an inlet-outlet (IN-OUT) connector or utility connector, the pipeline flow determination module 230 retrieves the connector attributes to determine its impact on the flow path. For flow line segments, the pipeline flow determination module 230 determines whether they are horizontal or vertical pipelines based on their spatial orientation and connectivity. Once all nodes along the pipeline path are identified, the pipeline flow determination module 230 module generates a structured flow trace that represents the stepwise progression of fluid flow through the P&I system. Each flow trace consists of bounding boxes, flow direction, and node classifications, which collectively define the precise flow routing within the non-editable schematic illustration 300.

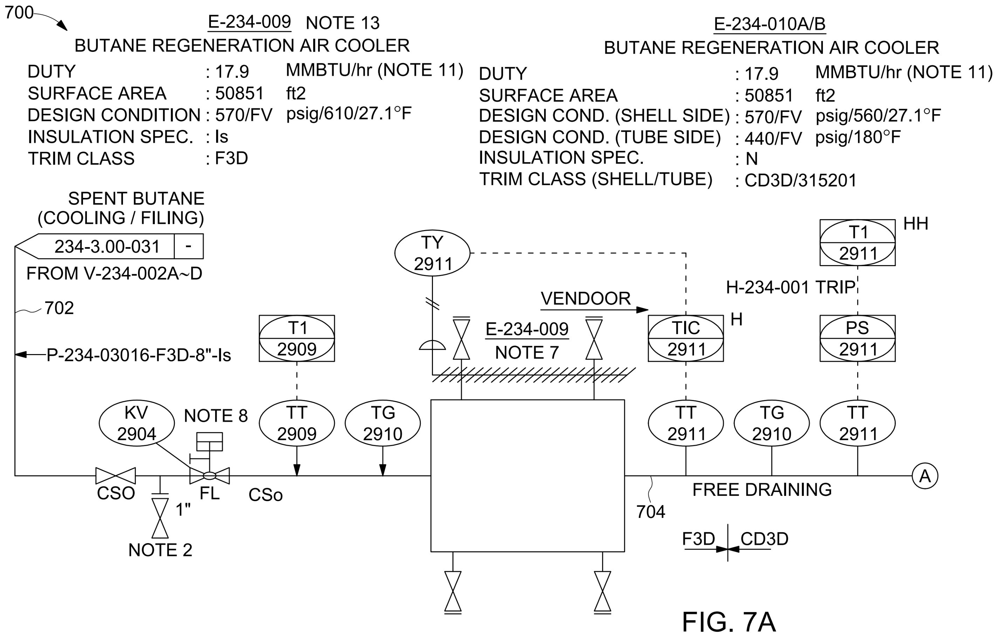

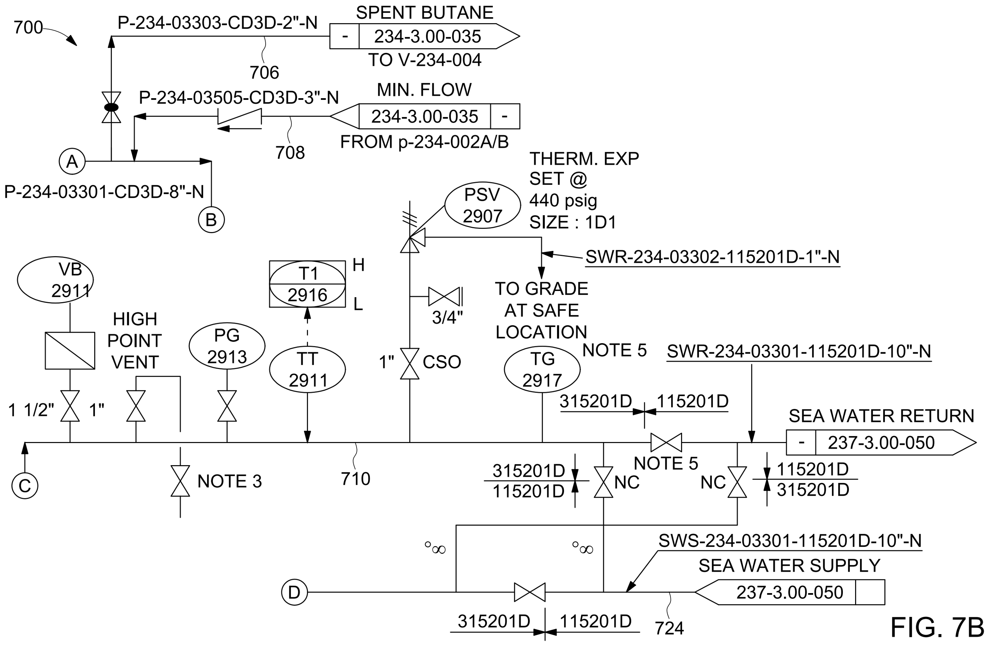

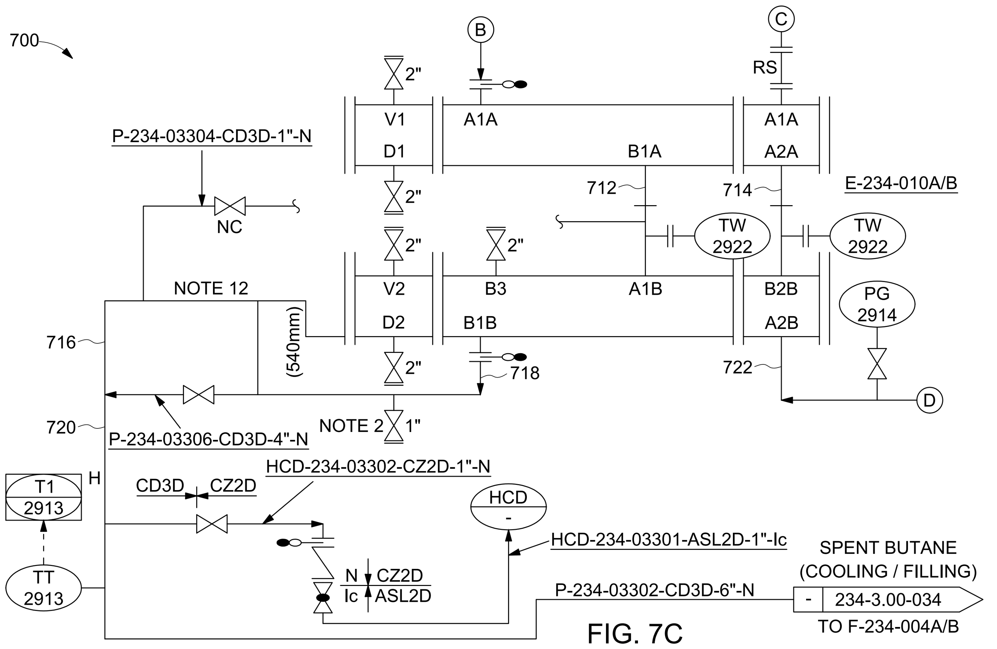

Referring now to **FIG. 7****,** a schematic representation illustrating determination of a set of flow-paths 702-724 based on the directed graph 600 of **FIG. 6****,** is depicted, in accordance with an embodiment of the present disclosure. The set of flow-paths 702-724 represent a sequence of interconnected nodes and pipelines, depicting the fluid movement across different process units in the non-editable schematic illustration. The set of flow-paths 702-724 are determined by analyzing the directed graph 600, which was previously generated using the one or more horizontal line clusters, the one or more vertical line clusters, the one or more pipeline nodes, and the one or more intersection nodes. In an exemplary embodiment, the pipeline flow determination module 230 traverses the directed graph 600 to extract distinct flow paths that represent fluid movement within the piping network. Each flow path begins at a source node, follows the directed edges to traverse through equipment, connectors, and flow lines, and terminates at a sink node.

Referring back to **FIG. 2****,** an editable schematic illustration may be generated based on the pipeline flow and a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference.

It should be noted that all such aforementioned modules 202-230 may be represented as a single module or a combination of different modules. Further, as will be appreciated by those skilled in the art, each of the modules 202-230 may reside, in whole or in parts, on one device or multiple devices in communication with each other. In some embodiments, each of the modules 202-230 may be implemented as dedicated hardware circuit comprising custom application-specific integrated circuit (ASIC) or gate arrays, off-the-shelf semiconductors such as logic chips, transistors, or other discrete components. Each of the modules 202-230 may also be implemented in a programmable hardware device such as a field programmable gate array (FGPA), programmable array logic, programmable logic device, and so forth. Alternatively, each of the modules 202-230 may be implemented in software for execution by various types of processors (e.g., processor 104). An identified module of executable code may, for instance, include one or more physical or logical blocks of computer instructions, which may, for instance, be organized as an object, procedure, function, or other construct. Nevertheless, the executables of an identified module or component need not be physically located together but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for determining pipeline flow in a non-editable schematic illustration. For example, the exemplary system 100 and the associated computing device 102 may determine pipeline flow in a non-editable schematic illustration by the processes discussed herein. In particular, as will be appreciated by those of ordinary skill in the art, control logic and/or automated routines for performing the techniques and steps described herein may be implemented by the system 100 and the associated computing device 102 either by hardware, software, or combinations of hardware and software. For example, suitable code may be accessed and executed by the one or more processors on the system 100 to perform some or all of the techniques described herein. Similarly, application specific integrated circuits (ASICs) configured to perform some, or all of the processes described herein may be included in the one or more processors on the system 100.

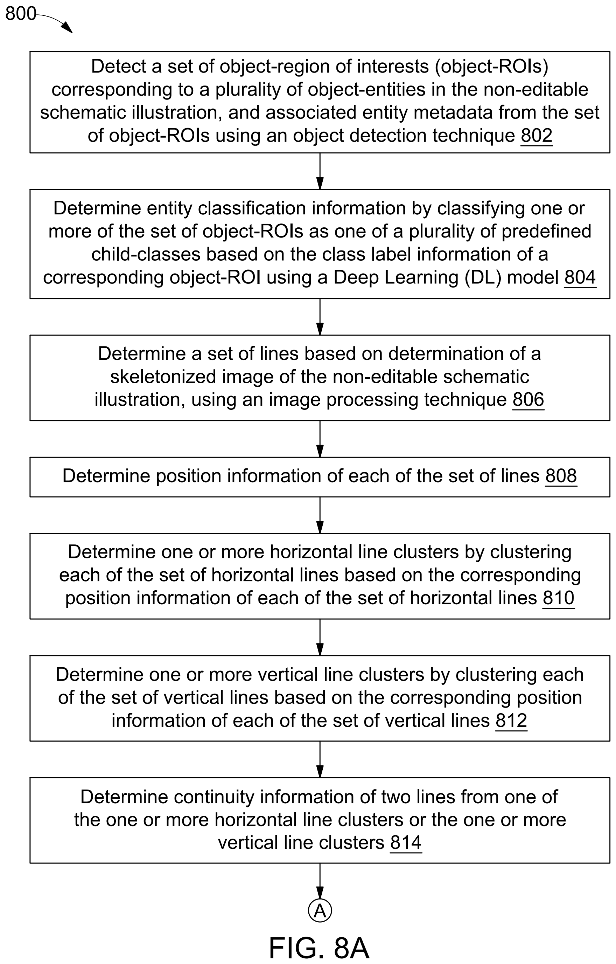

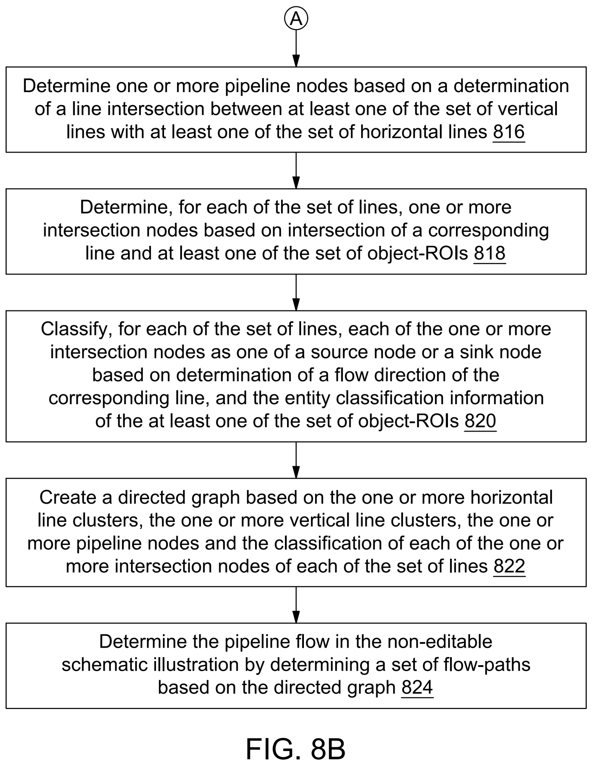

Referring now to **FIG. 8A** and **FIG. 8B****,** a flow diagram 800 of a methodology of determining pipeline flow in a non-editable schematic illustration, is illustrated, in accordance with an embodiment of the present disclosure. **FIG. 8A** and **FIG. 8B** are explained in conjunction with **FIGs. 1-2****.** In an embodiment, the flow diagram 800 may include a plurality of steps that may be performed by various modules of the computing device 102 so as to determine pipeline flow in the non-editable schematic illustration. A non-editable schematic illustration may be received as an input. It should be noted that the input may be indicated or provided by a user via the I/O device 108. In an embodiment, the non-editable schematic illustration may correspond to a Piping and Instrument Diagram (P&ID). In an embodiment, the P&ID may be a schematic illustration of a Piping and Instrument (P&I) system used in industries. In an embodiment, the non-editable schematic illustration may be provided in various formats, including but not limited to, image files (e.g., PNG, JPEG), or document formats (e.g., PDF).

In an embodiment, the non-editable schematic illustration may be pre-processed based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, the non-editable schematic illustration may thereafter be sliced based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference. In an embodiment, a set of text-region of interests (text-ROIs) corresponding to text data in the non-editable schematic illustration may be detected based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION"

At step 802, a set of object-region of interests (object-ROIs) corresponding to a plurality of object-entities in the non-editable schematic illustration using an object detection technique. In an embodiment, the plurality of object-entities may include, but are not limited to, lines, instruments, valves, fittings, equipment, and connectors. In an embodiment, the lines may include, but are not limited to, O-sign lines, double slash lines, dotted lines, and flow arrows. In an embodiment, the instruments may include, but are not limited to, shared indicators, indicators, computer indicators, and programmable indicators. In an embodiment, the valves may include, but are not limited to, gate valves, check valves, glove valves, butterfly valves, needle valves, and three-way valves. In an embodiment, the fittings may include, but are not limited to, flanges, caps, reducers, hose connections, and spectacle blinds. In an embodiment, the equipment may include, but are not limited to, air coolers, water coolers, and tube and shell exchangers. In an embodiment, the connectors may include, but are not limited to, inlet-outlet (IN-OUT) connectors, rectangle connectors, utility connectors, and drain connectors. In an embodiment, examples of the object detection technique may include, but are not limited to, a cascade classifiers, a support vector machine, a template matching technique, a region-based convolutional neural network (R-CNN), you only look once (YOLO) technique, an EfficientDet technique, a RetinaNet technique, a vision transformers technique, and a CenterNet technique.

Further, associated entity metadata may be determined from the set of object-ROls using the object detection technique. In an embodiment, the entity metadata may include object orientation information, class label information, and object location information associated to each of the set of object-ROIs. The class label information may be determined based on a classification of each of the set of object-ROIs as one of a plurality of predefined classes and as one of a plurality of predefined sub-classes of each of the plurality of predefined classes using the object detection technique. In an embodiment, the plurality of predefined classes may include, but are not limited to, an instrument, a valve, a fitting, an equipment, and a connector. In an embodiment, the plurality of predefined sub-classes of the instrument may include, but are not limited to, a shared indicator, an indicator, a computer indicator, and a programmable indicator. In an embodiment, the plurality of predefined sub-classes of the valve may include, but are not limited to, a gate valve, a check valve, a globe valve, a butterfly valve, a needle valve, and a three-way valve. In an embodiment, the plurality of predefined sub-classes of the fitting may include, but are not limited to, a flange, a cap, a reducer, a hose connection, and a spectacle blind. In an embodiment, the plurality of predefined sub-classes of the equipment may include, but are not limited to, an air cooler, a water cooler, and a tube and shell exchanger. In an embodiment, the plurality of predefined sub-classes of the connector may include, but are not limited to, an inlet-outlet (IN-OUT) connector, a rectangle connector, a utility connector, and a drain connector.

Further at step 804, entity classification information may be determined by classifying one or more of the set of object-ROls as one of the plurality of predefined child-classes based on the class label information of a corresponding object-ROls using a Deep Learning (DL) model. In an embodiment, examples of the DL model may include, but are not limited to, a Recurrent Neural Network (RNN), a Bidirectional LSTM, a Convolutional Neural Network (CNN), a transformer-based model, a graph neural network, a sequence-to-sequence (Seqq2Seq) model, a multi-task learning model.

In order to determine the entity classification information of the set of object-ROls sub-classified as the flow arrow, the one or more of the set of object-ROIs sub-classified as the flow arrow may be further classified as one of the plurality of predefined child-classes that may include a left flow arrow, an up flow arrow, a down flow arrow, a right flow arrow, an up-left flow arrow, a down flow arrow, and a down-left flow arrow. In order to classify, a set of arrow-ROIs may be determined from the set of object-ROls sub-classified as the flow arrow. In order to classify, a direction of each of the set of arrow-ROIs may be determined from a plurality of directions using a direction classification model.

In order to determine the entity classification information of the set of object-ROls sub-classified as the rectangle connector, the one or more of the set of object-ROIs sub-classified as the rectangle connector may be further classified as one of the plurality of child-classes that may include an outlet connector and an inlet connector. In order to classify the one or more of the set of object-ROIs sub-classified as the rectangle connector, the set of object-ROls sub-classified as the rectangle connector may be further classified as one of the outlet connector or the inlet connector based on detection of a set of predefined keywords in the text metadata associated to the one or more of the set of object-ROls.

In order to determine the entity classification information of the set of object-ROls sub-classified as the IN-OUT connector, the one or more of the set of object-ROIs sub-classified as the IN-OUT connector may be further classified as one of the plurality of predefined-child-classes that may include an inlet connector and an outlet connector, using one or more predefined classification rules. In an embodiment, the entity classification information of the set of object-ROls sub-classified as the IN-OUT connector may be determined based on a methodology described in co-filed Indian Patent Application, Application No. [202541019135], filed on March 04, 2025, titled "METHOD AND SYSTEM FOR GENERATING EDITABLE SCHEMATIC ILLUSTRATION OF NON-EDITABLE SCHEMATIC ILLUSTRATION" incorporated herein in its entirety by reference.

Further at step 806, a set of lines may be determined based on determination of a skeletonized image of the non-editable schematic illustration, using an image processing technique. In an embodiment, the set of lines may be determined based on a determination of a set of vertical lines, a set of horizontal lines, and a set of angular lines. In an embodiment, examples of the image processing technique may include, but are not limited to, a Hough Transform technique, an edge detection technique, a line segment detection technique, a radon transform, a line detection technique, and a convolutional neural network (CNN) technique.

Further at step 808, position information of each of the set of lines may be determined. Further at step 810, one or more horizontal line clusters may be determined by clustering each of the set of horizontal lines based on the corresponding position information of each of the set of horizontal lines. In order to determine the one or more horizontal line clusters for each of the set of horizontal lines, a collinearity between one or more of the horizontal lines may be determined based on the corresponding position information.

Further at step 812, one or more vertical line clusters may be determined by clustering each of the set of vertical lines based on the corresponding position information of each of the set of vertical lines. In order to determine the one or more vertical line clusters for each of the set of vertical lines, a collinearity between one or more of the set of vertical lines may be determined based on the corresponding position information.

Further at step 814, continuity information of two lines may be determined from one of the one or more horizontal line clusters or the one or more vertical line clusters. In order to determine the continuity information, a gap between each of the two lines may be determined based on the corresponding position information of each of the two lines, a predefined threshold gap distance and based on detection of an object-ROI from the set of object-ROls or at least one line between the two lines. In an embodiment, the two lines may be determined to have same flow direction based on the continuity information.

Further at step 816, one or more pipeline nodes may be determined based on a determination of a line intersection between at least one of the set of vertical lines with at least one of the set of horizontal lines. Further at step 818, for each of the set of lines, one or more intersection nodes may be determined based on intersection of a corresponding line and at least one of the set of object-ROIs. Further at step 820, for each of the set of lines, each of the one or more intersection nodes may be classified as one of a source node or a sink node based on determination of a flow direction of the corresponding line, and the entity classification information of the at least one of the set of object-ROIs. Further at step 822, a directed graph may be created based on the one or more horizontal line clusters, the one or more vertical line clusters, the one or more pipeline nodes and the classification of each of the one or more intersection nodes of each of the set of lines. Accordingly at step 824, the pipeline flow may be determined in the non-editable schematic illustration by determining a set of flow-paths based on the directed graph.

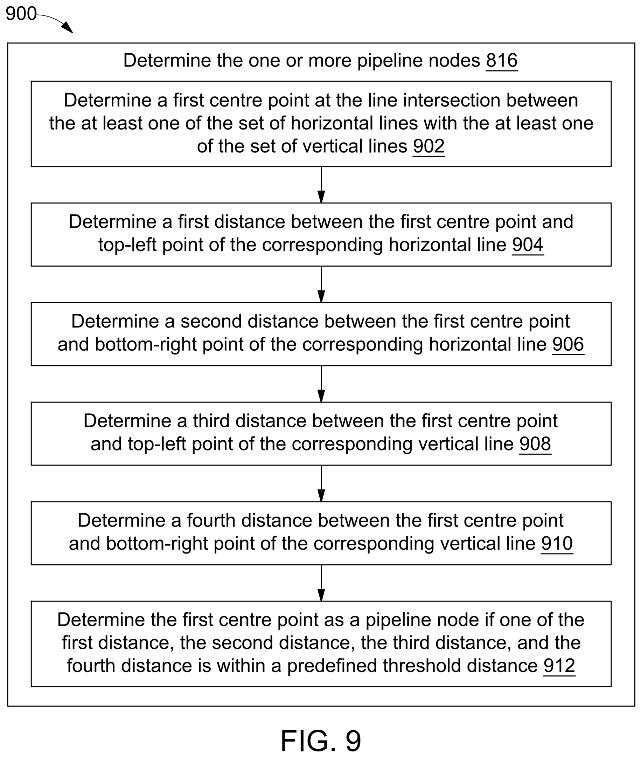

Referring now to **FIG. 9****,** a flow diagram of a methodology of determining one or more pipeline nodes, is illustrated, in accordance with an embodiment of the present disclosure. **FIG. 9** is explained in conjunction with **FIGs. 1-****2.** In an embodiment, the flow diagram may include a plurality of steps that may be performed by various modules of the computing device 102 so as to determine one or more pipeline nodes.

At step 902, a first centre point at the line intersection between the at least one of the set of horizontal lines with the at least one of the set of vertical lines may be determined. Further at step 904, a first distance between the first centre point and top-left point of the corresponding horizontal line may be determined. Further at step 906, a second distance between the first centre point and bottom-right point of the corresponding horizontal line may be determined. Further at step 908, a third distance between the first centre point and top-left point of the corresponding vertical line may be determined. Further at step 910, a fourth distance between the first centre point and bottom-right point of the corresponding vertical line. The first centre point may be determined as a pipeline node if one of the first distance, the second distance, the third distance, and the fourth distance may be within a predefined threshold distance.

Thus, the disclosed method 800 and system 100 overcome the challenges associated with the processing of non-editable schematic illustrations, such as Piping and Instrumentation Diagrams (P&IDs), by providing methodology to determine pipeline flow in the non-editable schematic illustration. Unlike conventional methods that rely solely on basic image processing or text recognition, the disclosed method 800 and system 100 leverage advanced deep learning models, computer vision techniques, and graph-based analysis to accurately extract flow paths, equipment connections, and node classifications from non-editable schematic illustration.

In particular, the system 100 and method 800 address key limitations in existing P&ID processing techniques by providing an automated and intelligent approach for detecting pipeline structures, identifying process flow, and accurately determining pipeline connectivity in non-editable schematic illustrations. Unlike conventional image processing-based methods that struggle with line overlaps, noise, and variations in diagram formatting, the disclosed method 800 and system 100 utilizes a combination of deep learning, image processing, and graph-based flow analysis to extract and interpret pipeline flow paths with greater accuracy and efficiency.

The disclosed method 800 and system 100 begins by detecting object-regions of interest (object-ROls) in the non-editable schematic illustration, identifying key entities such as pumps, valves, fittings, connectors, and equipment using an object detection model. Alongside detecting these entities, the system 100 extracts important metadata, including position, orientation, and classification labels. To establish the underlying pipeline structure, the system 100 analyses the skeletal representation of the non-editable schematic illustration, distinguishing between horizontal and vertical pipelines while clustering similar lines based on their positions. The system 100 then determines pipeline nodes by identifying intersections between horizontal and vertical lines, marking crucial junction points within the pipeline network. Additionally, the system 100 detects intersection nodes where pipelines connect with process equipment or connectors, classifying them as source nodes (where flow originates) or sink nodes (where flow terminates) based on the detected entity metadata and flow direction analysis. Further, the system 100 creates a directed graph, which represents the pipeline network as a structured model which integrate the identified pipeline nodes, intersection nodes, and flow line clusters. This graph-based representation allows for an efficient determination of fluid movement, thereby enabling the system 100 to trace the exact flow paths across the pipeline network with high precision. Finally, by using the directed graph, the system 100 determines complete pipeline flow paths.

Thus, the disclosed method 800 and system 100 overcome challenges in P&ID interpretation and processing by providing an automated, Al-driven solution that eliminates manual interpretation errors by using deep learning for object detection and classification. Further, the disclosed method 800 and system 100 handles complex, non-editable schematic illustrations by applying image processing to skeletonize pipeline structures. The disclosed method 800 and system 100 also resolves ambiguities in flow direction by incorporating graph-based connectivity analysis. Furthermore, the disclosed method 800 and system 100 converts static schematic diagrams into digital, structured flow models, thereby making them usable for process automation, monitoring, and optimization.

As will be appreciated by those skilled in the art, the techniques described in the various embodiments discussed above are not routine, or conventional, or well-understood in the art. The techniques discussed above provide for determining pipeline flow in non-editable schematic illustration.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps bring an improvement in the functioning of the device itself as the claimed steps provide a technical solution to a technical problem.

The specification has described the method and system for determining pipeline flow in non-editable schematic illustration. The illustrated steps are set out to explain the exemplary embodiments shown, and it should be anticipated that ongoing technological development will change the manner in which particular functions are performed. These examples are presented herein for the purpose of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

It is intended that the disclosure and examples be considered as exemplary only, with a true scope of disclosed embodiments being indicated by the following claims.

## Claims

1. A method (800) for determining pipeline flow in a non-editable schematic illustration (300), the method (800) comprising:
detecting (802), by a processor (104), a set of object-region of interests (object-ROIs) corresponding to a plurality of object-entities in the non-editable schematic illustration (300) and associated entity metadata from the set of object-ROls using an object detection technique,
wherein the entity metadata comprises object orientation information, class label information, and object location information associated to each of the set of object-ROls;
determining (804), by the processor (104), entity classification information by classifying one or more of the set of object-ROls as one of a plurality of predefined child-classes based on the class label information of a corresponding object-ROI using a Deep Learning (DL) model;
determining (806), by the processor (104), a set of lines based on determination of a skeletonized image of the non-editable schematic illustration, using an image processing technique, wherein the set of lines are determined based on a determination of a set of vertical lines and a set of horizontal lines;
determining (808), by the processor (104), position information of each of the set of lines;
determining (810), by the processor (104), one or more horizontal line clusters by clustering each of the set of horizontal lines based on the corresponding position information of each of the set of horizontal lines;
determining (812), by the processor (104), one or more vertical line clusters by clustering each of the set of vertical lines based on the corresponding position information of each of the set of vertical lines;
determining (816), by the processor (104), one or more pipeline nodes (506) based on a determination of a line intersection between at least one of the set of vertical lines with at least one of the set of horizontal lines;
for each of the set of lines:
determining (818), by the processor (104), one or more intersection nodes based on intersection of a corresponding line and at least one of the set of object-ROls; and
classifying (820), by the processor (104), each of the one or more intersection nodes as one of: a source node (502) or a sink node (504) based on:
determination of a flow direction of the corresponding line; and
the entity classification information of the at least one of the set of object-ROIs;
creating (822), by the processor (104), a directed graph (600) based on the one or more horizontal line clusters, the one or more vertical line clusters, the one or more pipeline nodes (506) and the classification of each of the one or more intersection nodes of each of the set of lines; and
determining (824), by the processor (104), the pipeline flow in the non-editable schematic illustration (300) by determining a set of flow-paths (702-724) based on the directed graph (600).

2. The method (800) as claimed in claim 1, wherein the class label information of each of the set of object-ROls is determined based on a classification of each of the set of object-ROIs as one of a plurality of predefined classes and as one of a plurality of predefined sub-classes of each of the plurality of predefined classes using the object detection technique.

3. The method (800) as claimed in claim 2, wherein the non-editable schematic illustration (300) corresponds to a Piping and Instrument Diagram (P&ID),
wherein the plurality of predefined classes comprises a line, an instrument, a valve, a fitting, an equipment, and a connector,
wherein the plurality of predefined sub-classes of the line comprises an O-sign line, a double slash sign line, a dotted line, and a flow arrow,
wherein the plurality of predefined sub-classes of the instrument comprises a shared indicator, an indicator, a computer indicator, and a programmable indicator,
wherein the plurality of predefined sub-classes of the valve comprises a gate valve, a check valve, a globe valve, a butterfly valve, a needle valve, and a three-way valve,
wherein the plurality of predefined sub-classes of the fitting comprises a flange, a cap, a reducer, a hose connection, and a spectacle blind,
wherein the plurality of predefined sub-classes of the equipment comprises an air cooler, a water cooler, a pump, a reservoir, and a tube and shell exchanger, and
wherein the plurality of predefined sub-classes of the connector comprises an inlet-outlet (IN-OUT) connector, a rectangle connector, a utility connector, and a drain connector.

4. The method (800) as claimed in claim 3, comprising:
classifying the one or more of the set of object-ROIs sub-classified as the flow arrow as one of the plurality of predefined child-classes comprising a left flow arrow, an up flow arrow, a down flow arrow, and a right flow arrow,
wherein the classification comprises:
determining, by the processor (104), a set of arrow-ROIs from the set of object-ROls sub-classified as the flow arrow; and
determining, by the processor (104), a direction of each of the set of arrow-ROIs from a plurality of directions using a direction classification model.

5. The method (800) as claimed in claim 4, comprising:
classifying the one or more of the set of object-ROIs sub-classified as the rectangle connector as one of the plurality of predefined child-classes comprising an outlet connector and an inlet connector, wherein the classification comprises:
classifying, by the processor (104), the set of object-ROIs sub-classified as the rectangle connector as one of: the outlet connector or the inlet connector based on detection of a set of predefined keywords in the text metadata associated to the one or more of the set of object-ROIs.

6. The method (800) as claimed in claim 5, comprising:
classifying, by the processor (104), the one or more of the set of object-ROls sub-classified as the IN-OUT connector as one of the plurality of predefined child-classes comprising an inlet connector and an outlet connector, using one or more predefined classification rules.

7. The method (800) as claimed in claim 6, wherein the determination of the one or more horizontal line clusters comprises:
determining, by the processor (104) and for each of the set of horizontal lines, a collinearity between one or more of the set of horizontal lines based on the corresponding position information; and
wherein the determination of the one or more vertical line clusters comprises:
determining, by the processor (104) and for each of the set of vertical lines, a collinearity between one or more of the set of vertical lines based on the corresponding position information.

8. The method (800) as claimed in claim 7, comprises:
determining (814), by the processor (104), continuity information of two lines from one of: the one or more horizontal line clusters or the one or more vertical line clusters, wherein the determination of the continuity information comprises:
determining, by the processor (104), a gap between each of the two lines based on the corresponding position information of each of the two lines, a predefined threshold gap distance and based on detection of an object-ROI from the set of object-ROIs or at least one line between the two lines,
wherein the two lines are determined to have same flow direction based on the continuity information.

9. The method (800) as claimed in claim 8, wherein determining (816) the one or more pipeline nodes comprises:
determining (902), by the processor (104), a first centre point at the line intersection between the at least one of the set of horizontal lines with the at least one of the set of vertical lines;
determining (904), by the processor (104), a first distance between the first centre point and top-left point of the corresponding horizontal line;
determining (906), by the processor (104), a second distance between the first centre point and bottom-right point of the corresponding horizontal line;
determining (908), by the processor (104), a third distance between the first centre point and top-left point of the corresponding vertical line;
determining (910), by the processor (104), a fourth distance between the first centre point and bottom-right point of the corresponding vertical line; and
determining (912), by the processor (104), the first centre point as a pipeline node if one of the first distance, the second distance, the third distance, and the fourth distance is within a predefined threshold distance.

10. A system (100) for determining pipeline flow in a non-editable schematic illustration (300), comprising:
a processor (104); and
a memory (106) communicatively coupled to the processor (104), wherein the memory (106) stores processor-executable instructions, which, on execution, cause the processor (104) to:
detect a set of object-region of interests (object-ROIs) corresponding to a plurality of object-entities in the non-editable schematic illustration (300) and associated entity metadata from the set of object-ROls using an object detection technique, wherein the entity metadata comprises object orientation information, class label information, and object location information associated to each of the set of object-ROls;
determine entity classification information by classifying one or more of the set of object-ROIs as one of a plurality of predefined child-classes based on the class label information of a corresponding object-ROI using a Deep Learning (DL) model;
determine a set of lines based on determination of a skeletonized image of the non-editable schematic illustration, using an image processing technique, wherein the set of lines are determined based on a determination of a set of vertical lines and a set of horizontal lines;
determine position information of each of the set of lines;
determine one or more horizontal line clusters by clustering each of the set of horizontal lines based on the corresponding position information of each of the set of horizontal lines;
determine one or more vertical line clusters by clustering each of the set of vertical lines based on the corresponding position information of each of the set of vertical lines;
determine one or more pipeline nodes (506) based on a determination of a line intersection between at least one of the set of vertical lines with at least one of the set of horizontal lines;
for each of the set of lines:
determine one or more intersection nodes based on intersection of a corresponding line and at least one of the set of object-ROIs; and
classify each of the one or more intersection nodes as one of: a source node (502) or a sink node (504) based on:
determination of a flow direction of the corresponding line; and
the entity classification information of the at least one of the set of object-ROIs;
create a directed graph (600) based on the one or more horizontal line clusters, the one or more vertical line clusters, the one or more pipeline nodes and the classification of each of the one or more intersection nodes of each of the set of lines; and
determine the pipeline flow in the non-editable schematic illustration by determining a set of flow-paths (702-724) based on the directed graph (600).
